# EUROPEAN PATENT SPECIFICATION

(11) **EP 4 592 803 B1**
(45) Date of publication and mention of the grant of the patent: **03.06.2026**
(21) Application number: 24201789.5
(22) Date of filing: 20.09.2024
(51) Int. Cl.: G06F 3/048, G06F 3/04847, G06F 3/0484, G06F 3/04886

(54) **A RESPONSE SYSTEM CONFIGURED TO CREATE A RESPONSE PROFILE FOR GENERATING INSTRUCTIONS FOR A TARGET SYSTEM**
ANTWORTSYSTEM ZUR ERZEUGUNG EINES ANTWORTPROFILS ZUR ERZEUGUNG VON ANWEISUNGEN FÜR EIN ZIELSYSTEM
SYSTÈME DE RÉPONSE CONFIGURÉ POUR CRÉER UN PROFIL DE RÉPONSE POUR GÉNÉRER DES INSTRUCTIONS POUR UN SYSTÈME CIBLE

(30) Priority: 02.09.2024 GB 202412860
(43) Date of publication of application: 30.07.2025
(73) Proprietor: Novum Investment Management Limited, London EC2N 1AR (GB)
(72) Inventor: WILSON, Jon, London, EC2N 1AR (GB)
(74) Representative: Keltie LLP

(56) References cited:
- WO-A1-2017/214086
- US-A1- 2013 013 124
- US-A1- 2023 063 610
- US-B2- 8 468 465
- ANONYMOUS: "Q factor - Wikipedia", 8 March 2021 (2021-03-08), pages 1 - 11, XP093243412, Retrieved from the Internet <URL:https://en.wikipedia.org/w/index.php?title=Q_factor&oldid=1011059681> [retrieved on 20250127]

## Description

### TECHNICAL FIELD

The present disclosure relates to a response system configured to create a response profile for generating instructions for a target system and more specifically, though not exclusively, to a response system for creating a multiple-parameter response profile whereby a user can readily create the profile with minimal knowledge of the variable parameters required to be specified for the creation of a complex multiple-parameter profile for using in generating multiple parameter instructions for the target system. The target system may be any computer system, which interacts with a signal and is configured by the instructions to change its operation in response to changing external and environmental conditions to accord with the user-specified response profile. The present disclosure extends to a Graphical User Interface (GUI) used to simplify the creation of the multiple-parameter response profile.

### BACKGROUND

Many systems are influenced by variables that are independent of the system. Influencing variables include, for example variables related to the environment surrounding the system (temperature, background noise, humidity, pressure), or variables related to external factors (available bandwidth, power supply consumption). Systems are often influenced by these variables, without having any control over them. It is desirable for systems to respond to changes in status or condition of the system caused by the values of such variables not in the control of the system, for example by changing the operation of the system in some way, so that the system achieves a particular outcome.

In some applications, a response strategy is designed for a system. The response strategy defines a desired response of the system for changes in status or condition of the system caused by changing values of one or more particular variables (the variables not being controlled by the system and typically independent of the system). Typical methods for designing such response strategies require many inputs from a user: systems are typically governed by a large number of parameters and designing a response strategy requires inputting a desired response for each parameter of the system which together define how the system should respond to a change in the condition/status of the system. In complex systems, comprising many parameters, configuring the system to have a particular response strategy is extremely time consuming and often requires knowledge of all of the parameters and their combined effects on the response strategy. Additionally, the user may also have to define some system limitations, and other limitations may be inherent in the system. Furthermore, the configuring the system requires the knowledge of the relationships between different controllable system variables when designing the response strategy as changes to one variable may have undesirable effects on other variables. Therefore, designing and defining response strategies for such systems is difficult from the point of view of inputting data into a computer system to define the strategy, and requires specialist user knowledge.

An objective of the present disclosure is therefore to address at least some of the limitations described above.

US 2023/063610 describes a gaming system that cooperates with a graphical user interface to enable user modification and enhancement of one or more audio streams associated with the gaming system. In embodiments, the audio streams may include a game audio stream, a chat audio stream of conversation among players of a video game, and a microphone audio stream of a player of the video game.

US8468465 describes a computer program that provides a graphical user interface (GUI) for controlling an application. The GUI includes a contiguous two-dimensional sliding region for defining several values. The GUI also includes several sliders for moving within the sliding region. Each slider selects one or more values from the several values based on a position of the slider within the sliding region. The selected values are parameters for controlling one or more operations of the application.

US2013013124 describes a computer program for an energy management application that provides a GUI that allows linking interface elements. Via said link the document describes user interface manipulation methods that allow to change multiple settings using a single user input element.

### SUMMARY OF THE INVENTION

According to one aspect of the present disclosure, there is provided a Graphical User Interface (GUI) generator configured to determine values of a plurality of response-profile defining parameters and to generate a displayable GUI, the GUI generator being configured to generate a GUI comprising: a first user-controllable slider object for setting a value of an aggregator parameter, wherein the aggregator parameter has a set of predetermined relationships with each of a plurality of response profile-defining-parameters; and a two-dimensional response graph of the current state value of a signal being handled by a target system against a desired response parameter, the two-dimensional graph showing a multiple-parameter response profile generated by: a value of a reference parameter; a value of the aggregator parameter, which in turn determines the values of the plurality of response-defining parameters; and a set of predetermined constraints; wherein the value of the reference parameter determines a reference point on the two-dimensional graph and the value of the aggregator parameter and the set of predetermined constraints determine the shape of the entire response profile with respect to the reference point for different values of the current state value; wherein the GUI generator is configured to provide the multiple-parameter response profile to a parameter setting engine to enable generation of the multiple-parameter instruction in response to the current state value of the signal using the multiple-parameter response profile.

In some embodiments, the GUI further comprises a second user-controllable slider control object for setting the value of the reference parameter. In this embodiment the user sets the reference value which is preferably. However in other embodiments, the value of the reference parameter can be predetermined, which further simplifies the GUI and makes the area occupied by the GUI on a small screen device to be smaller.

According to one aspect of the present disclosure there is provided a computer-implemented response system configured to create a multiple-parameter response profile to generate a multiple-parameter instruction for a target system to respond to a current state value of a signal being handled by the target system, the response system comprising: a Graphical User Interface (GUI) generator according to the previous aspect of the present disclosure, the GUI further comprising a second user-controllable slider control object for setting a value of a reference parameter;; a parameter setting engine configured to generate the multiple-parameter instruction in response to the current state value of the signal using the multiple-parameter response profile; and a communication engine for transmitting the multiple-parameter instruction to the target system to implement a response to the current state value of the signal.

The computer implemented response system described above provides a user with a way to configure a complex response profile involving tens of parameters by use of a very simple intuitive user interface with limited user input (only one or two user-set parameters) for generating a greater number of configuration values of parameters (typically more than eight) which define the response profile. Typically the response profile is non-linear for example it could be a piecewise linear function. The use of predetermined constraints ensures that the degree of variation of the plurality of parameters is within the operating limits of sensible operation. The ability to visualise the shape of the response profile as it is being adjusted by the user controls provides further speed in configuring the response profile. This in turn enables instructions which also have a plurality of different parameters to created and used in response to variation of the current state value of the signal being handled by the target system.

As has been described later, the present disclosure has applicability to many different types of target systems and accordingly, the creation of complex response profiles and the subsequent generation of a response using that profile can be used in numerous different technical applications.

In some embodiments, variation of the value of the first or second user-controlled slider objects results in real-time variation of the two-dimensional graph to illustrate the effect of the user-determined value of the reference parameter or the user-determined value of the aggregator parameter on the multiple-parameter response profile. This real-time variation not only speeds up the process of configuring the system to operate correctly in the desired manner but also advantageously makes changing the profile quick and easy as immediate feedback is provide as to the effect of changing a user variable on the response profile.

In some embodiments, the first and second user-controlled slider elements each comprise circumferential sliders. This makes the size of the controls efficient particularly on small screen sizes and also is aesthetically attractive.

Preferably, one of the first and second sliders is configured such that a first quantum of movement of one of the first and second sliders provides a non-linear second quantum of setting of a variable associated with the one of the first and second sliders. In this way, the GUI can be configured to enable a greater degree of control of settings of the user-controlled parameter in regions of its range of variation which are more important or more significant to the shape of the profile.

In some embodiments, the GUI further comprises a user-controlled point object for defining a pair of coordinate parameters, the point object being movable within the GUI in two dimensions, wherein the value of the pair of coordinate parameters alters the set of predetermined relationships with each of the plurality of response profile-determining parameters. This third user input control is very powerful as the previously fixed relationships between the aggregator parameter and the plurality of profile determining parameters can be changed. This provides an exponential benefit in the configuration of the Gui in seeking to establish a different operation response profile.

In some embodiments. the pair of coordinate parameters defined by the user-controlled point object defines coordinate values in orthogonal directions. This is the simplest manner in which a user can control the user-controlled point object.

The user-controlled point object may be positioned within one of the circumferential sliders and have a range of movement determined by an area defined by the circumferential slider. This also provides a very efficient use of screen area for the GUI thereby enabling the implementation on small-sized screen devices to be possible.

In some embodiments, the computer-implemented system is embodied within a mobile device having a touch screen with a screen size diagonal smaller than 18 centimetres. Generating a GUI using which the user can specify tens of parameters is therefore enabled on this relatively small screen size of such devices.

Preferably, the GUI generator is configured to determine a minimum of four points on the response profile defining eight values of variables in two-dimensional space. This is a particular number of variables which gives a reasonable degree of complexity in the response profile with minimal required user input. More preferably the GUI generator is configured to determine a minimum of five points on the response profile defining values of ten variables in two-dimensional space. This is an even more preferred response profile that covers a large number of the applications for the response profile creation and implementation for instruction generation.

Preferably, the GUI generator is configured generate the response profile as a piecewise linear function. This is a very useful and efficient way to define a response profile in that only inflexions in the response profile need to be specified and the profile does not have to fit a function to be efficiently defined.

The constraints may control various different aspects of the response to ensure that the response profile is operable with the given target system. For example the constraints may define limits of a gradient of a portion of the response profile, an average gain about a determined level of the response profile, an amount of resource available to be used in generating the multiple-parameter instruction, or maximum or minimum of any profile-determining parameter.

In some very complex situations, the constraints may define a probability function applied across the response profile. This is very difficult to implement with a response profile but in the present embodiments this is simply applied as a constraint to the entire response profile.

According to another aspect of the present disclosure, there is provided a computer-implemented method of determining values of a plurality of response-profile defining parameters and generating a displayable Graphical User Interface (GUI), the method comprising: detecting a first user input at a user-controllable slider object of the GUI, the first user input being an adjustment of the user-controllable slider object setting a value of an aggregator parameter, wherein the aggregator parameter has a set of predetermined relationships with each of the plurality of response-defining parameters; generating a two-dimensional graph of current state values of a signal being handled by a target system against values of a desired response parameter, the two-dimensional graph showing the multiple-parameter response profile generated by: the value of a reference parameter; the value of the aggregator parameter which in turn determines the values of the plurality of response-defining parameters; and a set of predetermined constraints; wherein the value of the reference parameter determines a reference point on the two-dimensional graph and the value of the aggregator parameter and the set of predetermined constraints determine the shape of the entire response profile with respect to the reference point for different values of the current state value; and providing the multiple-parameter response profile to a parameter setting engine to enable generation of the multiple-parameter instruction in response to the current state value of the signal using the multiple-parameter response profile.

According to another aspect of the present disclosure, there is provided a computer-implemented method of creating a multiple-parameter response profile to be used to generate a multiple-parameter instruction for a target system to respond to a current state value of a signal being handled by the target system, the method comprising: generating a Graphical User Interface (GUI) according to the method of the previous aspect of the present disclosure, further comprising: detecting a second user input at a second user-controllable slider control object of the GUI, the second user input being an adjustment of the second user-controllable slider control object setting a value of a reference parameter; generating the multiple-parameter instruction in response to the current state value of the signal using the multiple-parameter response profile; and transmitting the multiple-parameter instruction to the target system to implement a response to the current state value of the signal.

### BRIEF DESCRIPTION OF THE DRAWINGS

The present disclosure will now be described, by way of example only, with reference to the accompanying drawings, in which:
**Figure 1** is a block diagram of a response system in accordance with an embodiment of the present disclosure;
**Figure 2** is an example response graph that may be generated by the response system of **Figure 1****;**
**Figure 3** is a block diagram showing the response system of **Figure 1** in greater detail;
**Figure 4** is a schematic illustration showing example graphical user interface (GUI) outputs that may be generated by the response system of **Figure 1** by fixing a reference user input and varying an aggregator user input;
**Figure 5** is an example response graph that may be generated by the response system of **Figure 1** when constraints of the system include a probability function;
**Figure 6** is a flowchart showing a method of creating a response graph and calculating parameters, in accordance with an embodiment of the present disclosure;
**Figure 7** is a flowchart showing a method of generating multi-parameter instructions in accordance with an embodiment of the present disclosure;
**Figure 8** is a schematic illustration showing an example GUI comprising three input elements, in accordance with an embodiment of the present disclosure;
**Figure 9a** is an example response graph that may be generated by the GUI of **Figure 8****;**
**Figure 9b** is a response graph showing multiple changes in the response profile from **Figure 9a** after a user adjusts the user input value of the aggregator parameter;
**Figure 10a** is an example response graph generated by the response system of **Figure 1** using three user input elements;
**Figure 10b** is an example response graph, showing the change in the response graph of **Figure 10a** following an increase in value of the aggregator parameter;
**Figure 10c** is an example response graph showing the change in the response graph of **Figure 10b** following an increase in value of the aggregator parameter;
**Figure 10d** is an example response graph showing the change in the response graph of **Figure 10c** following an increase in value of the aggregator parameter, before a constraint is met;
**Figure 10e** is an example response graph showing the change in the response graph of **Figure 10c** following an increase in value of the aggregator parameter, after a constraint is met;
**Figure 10f** is an example response graph showing the change in the response graph of **Figure 10e** following an increase in value of the aggregator parameter;
**Figure 10g** is an example response graph showing the change in the response graph of **Figure 10f** following an increase in value of the aggregator parameter;
**Figure 11a** is a schematic illustration showing an example GUI generated by the response system of **Figure 1** when an aggregator parameter is set to 0, in accordance with an embodiment of the present disclosure;
**Figure 11b** is a schematic illustration of an example GUI showing the change in the GUI of **Figure 11a** following an increase in the aggregator parameter value;
**Figure 11c** is a schematic illustration of an example GUI showing the change in the GUI of **Figure 10b** following an increase in the aggregator parameter value;
**Figure 11d** is a schematic illustration of an example GUI showing the change in the GUI of **Figure 11a** following an increase in the aggregator parameter value and a change in value of a third user input determining a pair of co-ordinate parameters;
**Figure 11e** is a schematic illustration of an example GUI showing the change in the GUI of **Figure 11d** following an increase in the aggregator parameter value;
**Figure 11f** is a schematic illustration of an example GUI showing the change in the GUI of **Figure 11a** following an increase in the aggregator parameter value and a change in value of the third user input;
**Figure 11g** is a schematic illustration of an example GUI showing the change in the GUI of **Figure 11f** following an increase in the aggregator parameter value;
**Figure 12** is a schematic illustration of an example GUI that may be generated by the response system of **Figure 1** where the target system is a graphic equaliser, in accordance with embodiments of the present disclosure. The GUI displays a frequency response profile in accordance with settings on a user-controllable circumferential slider object and a user-controlled point object;
**Figure 13a** is a schematic illustration showing the GUI of **Figure 12** showing a change in the frequency response profile following a change in position of the user-controlled point object of the GUI.
**Figure 13b** is a schematic illustration of the example GUI of **Figure 13a** showing a change in the frequency response profile following a change in dial position of the circumferential slider object;
**Figure 13c** is a schematic illustration of the example GUI of **Figure 12** showing a change in the frequency response profile following a change in position of the user-controlled point object of the GUI;
**Figure 13d** is a schematic illustration of the example GUI of **Figure 13c** showing a change in the frequency response profile following a change in dial position of the circumferential slider object;
**Figure 13e** is a schematic illustration of the example GUI of **Figure 12** showing a change in the frequency response profile following a change in position of the user-controlled point object of the GUI;
**Figure 13f** is a schematic illustration of the example GUI of **Figure 13e** showing a change in the frequency response profile following a change in dial position of the circumferential slider object;
**Figure 14a** is graphical representation of an example response graph of a worked example that may be generated by the response system of **Figure 1** before all constraints are met; and
**Figure 14b** is a graphical representation of the response graph of **Figure 14a** after all the constraints are met.

### DETAILED DESCRIPTION OF EMBODIMENTS OF THE DISCLOSURE

Embodiments of the present disclosure provide a graphical user interface (GUI) for enabling a user to readily create a multiple-parameter response strategy for a target system. The response strategy is, in one embodiment, a response to a condition signal provided to the target system, for example an audio signal. The GUI uses a small number of inputs provided by a user to generate the multiple-parameter response strategy to respond to the value (current state value) of the condition signal. In other embodiments, the condition signal can be a condition or status of an entity, such as an environmental control system, which responds to multi-parameter instructions. The response strategy typically involves the setting of tens of parameters on the basis of the minimal number of (typically two to three) user inputs. In some embodiments, only two user inputs are required to set more than ten parameters thereby hugely simplifying, for the user, the process of designing and implementing a complex (multiple parameter defining) response strategy. Accordingly, the GUI of the present disclosure provides a very simple tool and method, that requires minimal user input, for generating a multi-parameter response strategy for the target system.

The target system may be any computer-implemented system that is governed by multiple parameters and is required to respond in some way to different values of a current status/condition parameter concerning the target system. For example, the GUI of the present disclosure may be used to generate a response strategy for a fuel cell control system (to respond to different humidity values), or for designing a frequency response strategy for a graphic equaliser for an audio signal. One of these applications is described in detail later.

The response strategy generated by the GUI of the present disclosure is displayed on a display of a response system as a line graph (also referred to as a response graph). The response graph shows the desired response (outcome) of the response system for a changing value of a particular value or characteristic of the condition signal provided to the response system, hereinafter referred to as the current state value parameter. The current state value parameter can, in some embodiments, provide a current status of the target system and may require a positive response from the response system in some way to meet a desired operation profile. On the response graph, the independent current state value parameter is provided on the x-axis, and the desired response value (which can in some embodiments be a threshold for generating a particular response) is provided on the y-axis. The response graph therefore provides a response profile for the system which decides how the response system will respond depending on the value of the current state value parameter. The response graph may be used to generate a multiple parameter instruction for the target system. The multi-parameter instruction comprises control actions for the target system, which instruct the target system to respond (e.g., by changing operation or carrying out a new operation) in a way that achieves a desired outcome dictated by the response strategy.

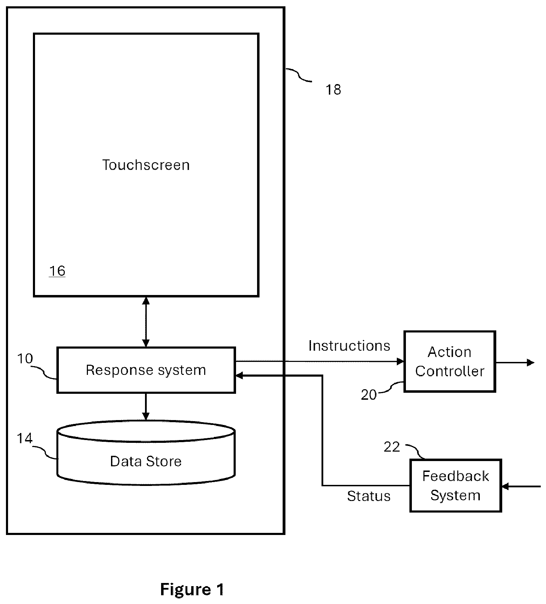

A response system 10 configured to provide a GUI for easily generating a response strategy in accordance with an embodiment of the present disclosure is presented in **Figure 1****.** The response system 10 is used to generate a response strategy for a target system (not illustrated). The target system that the response strategy may be generated for is a system with a desired outcome, which is achieved by the multiple-parameter instruction of the response system compensating for a changing status/condition of the condition signal concerning the target system caused by a change to a particular current status value parameter. For example, the response system 10 may be part of a fuel cell control system, the independent cause of a change may be humidity, and the current status value parameter provided by the condition signal, which is provided to the response system, may be fuel cell efficiency. In this case, it may be desired to change a plurality of parameters governing the operation of the fuel cell in some way in response to the change of fuel cell efficiency caused by a change in humidity. In a further example, the system may be a graphic equaliser, the independent cause of a change may be frequency distortion, and the response system may desire to change channel settings in the graphic equaliser in response to a change in the frequency distribution of the audio signal, in order to maintain a particular audio profile.

As illustrated in **Figure 1****,** the response system 10 is in communication with a datastore 14 and coupled to a touch screen 16. The touch screen 16 may be a screen of a portable device 18 (e.g. a mobile phone or tablet). In such instances, the response system 10 is implemented on the portable device 18. However, in some embodiments the touch screen 16 may be a screen of a control panel in a control system, and the response system 10 is implemented in the control system. In particular, the response system 10 of the present disclosure is advantageous when coupled to a touchscreen with a relatively small screen size as this makes the user control implementable on a portable device, such as a portable mobile telecommunications device (i.e. a smartphone or tablet).

The response system 10 is also in operative communication with an action controller 20 and a feedback system 22. The action controller 20 and the feedback system both relate to the target system that the response system 10 is generating a response strategy for. The action controller 20 is configured to provide a multiple parameter instruction to the target system to take an action in response to the condition signal, related to the target system, having a particular value. The feedback system 22 is configured to monitor the value (current state value) of the condition signal and to provide this to the response system. In some embodiments, a change in the status/condition of the target system is caused by changing values of the multiple parameter instructions.

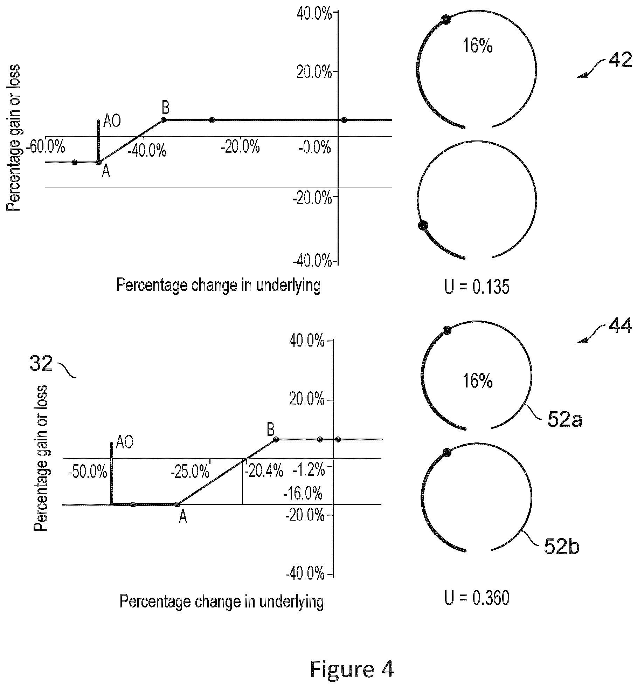

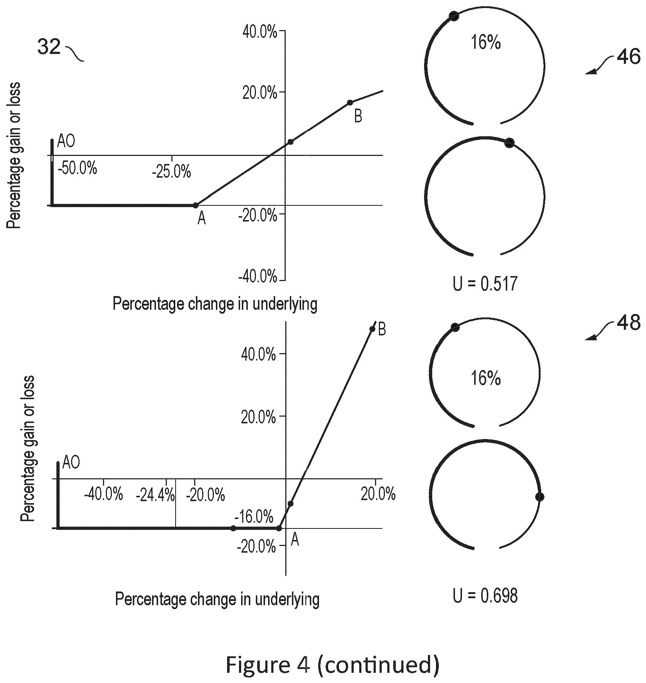

In use, a GUI is displayed on the touch screen, the GUI comprising user input elements or GUI objects (for example, a user input dial, discussed in detail later) and an initial response graph with orthogonal conventional x/y axes. The initial response graph may be a flat line with y=constant. To provide user inputs, a user interacts with (touches, swipes) the touch screen 16. The user input is detected by the response system 10. The response system 10 then generates a response profile which acts as the response strategy based on the user inputs. In other words, the initial response graph changes shape to reflect the new user inputs. A minimum of two user inputs are required for the response system 10 to generate the response profile, and these are discussed later with reference to **Figure 4****.** Additionally, in some embodiments, the response system 10 also uses data relating to the target system to generate the response profile. For example, when the external system is a fuel cell control system, the response system 10 may use data such as age of fuel cell components and constraints about how the fuel cell can be controlled/configured.

The response system 10 generates the response strategy as a line graph (response profile). The line graph shows the desired response of the system 10 as a function of the condition signal provided by the feedback system 22. Accordingly, the response graph shows the desired response for different values of the current state value parameter. A GUI is generated comprising the response graph, and output to the touch screen 16 to be displayed. In other words, the response graph generated based on the user inputs replaces the initial response graph (for example, y=constant) displayed on the GUI. The user can continue to interact with the GUI via the touch screen 16 to change the user inputs, and the displayed response graph will immediately (in real time) update accordingly. Once the user accepts the response graph, the response system 10 also calculates, based on the accepted response graph, a set (plurality) of parameters. The plurality of parameters describes the shape of the generated response graph and comprise both variable parameters and fixed parameters (discussed later). The accepted response graph, and the corresponding calculated parameters, are sent to the data store 14 for storage.

In this way, a response graph is created using a small number of user inputs: in some embodiments only two user inputs are required, as is discussed in detail later. Due to the minimal amount of user input required, designing a response strategy is very straightforward for a user. Additionally, as only two inputs are needed, it is easy to design a response graph on a screen with limited size (namely less than 18 cm in diagonal measurement), for example on a mobile phone.

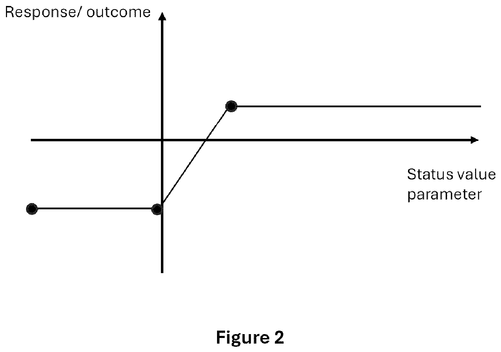

An example response graph that may be generated by the response system 10 of **Figure 1** and displayed via the GUI on the touch screen 16 is shown in **Figure 2****.** As illustrated, the response graph is displayed as a line graph. The value of the condition signal (i.e., the current state value parameter being provided to the response system 10 by the feedback system 22) is provided on the x-axis. The response value, namely the desired response (outcome), is provided on the y-axis. The response graph is therefore a piecewise linear function of the current state value parameter. As shown in **Figure 2****,** the response graph comprises a plurality of points. The number of points increases as the response graph becomes more complex. The position and gradient of the points on the response profile are used to calculate the parameters, as is discussed later.

Returning to **Figure 1****,** in some embodiments, once the response graph (response profile) is generated, the response system 10 is configured to send instructions to the action controller 20, to instruct the system to respond (for example by changing operation) to achieve the outcome defined by the generated response graph. To generate instructions, the response system 10 receives a value of the current state value parameter from the feedback system 22. In some embodiments, the feedback system 22 automatically provides the current state value parameter after a set time period. In other embodiments, the user requests the current state value parameter via the touch screen 16. Upon receiving the current state value parameter, the response system 10 generates multiple-parameter instructions based on the response graph, the calculated parameters (both of which are stored in the datastore), and the received current state value parameter. The multiple parameter instructions are provided to the action controller 20, which then provides a control signal to the target system based on the received instructions, to respond in line with the generated response graph.

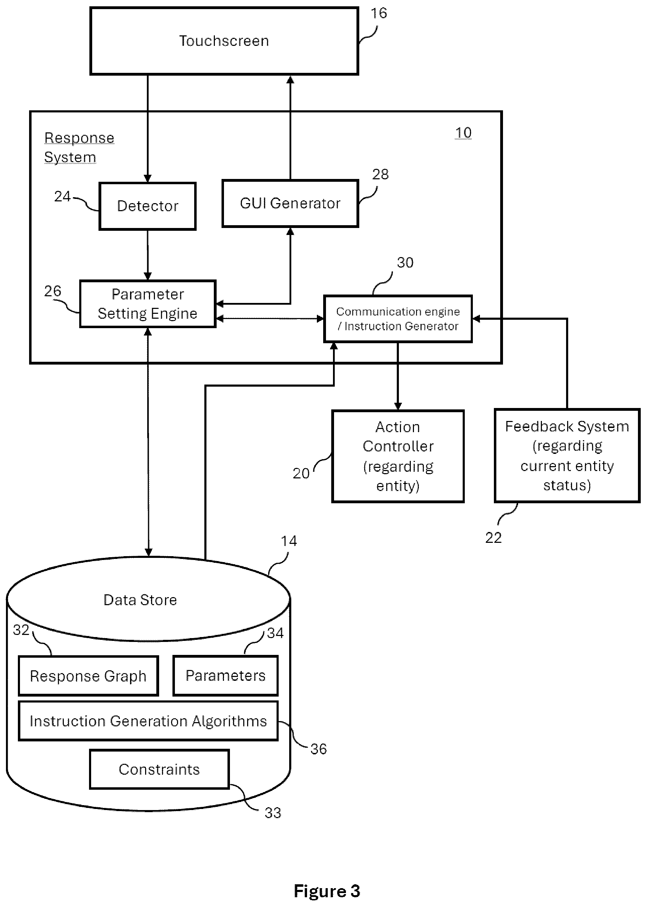

**Figure 3** shows the response system of **Figure 1** in greater detail. As illustrated, the response system 10 comprises a detector 24 coupled to a parameter setting engine 26. The parameter setting engine is also coupled to a GUI generator 28 and an instruction generator 30. The instruction generator 30 is operatively coupled to both the action controller 20 and the feedback system 22. Both the parameter setting engine and the instruction generator 30 are coupled to the datastore 14 for storing and retrieving information stored within the data store. The datastore 14 comprises a response graph 32 (in accordance with the response graph described above), constraints 33, parameters 34, and instruction generation algorithms 36.

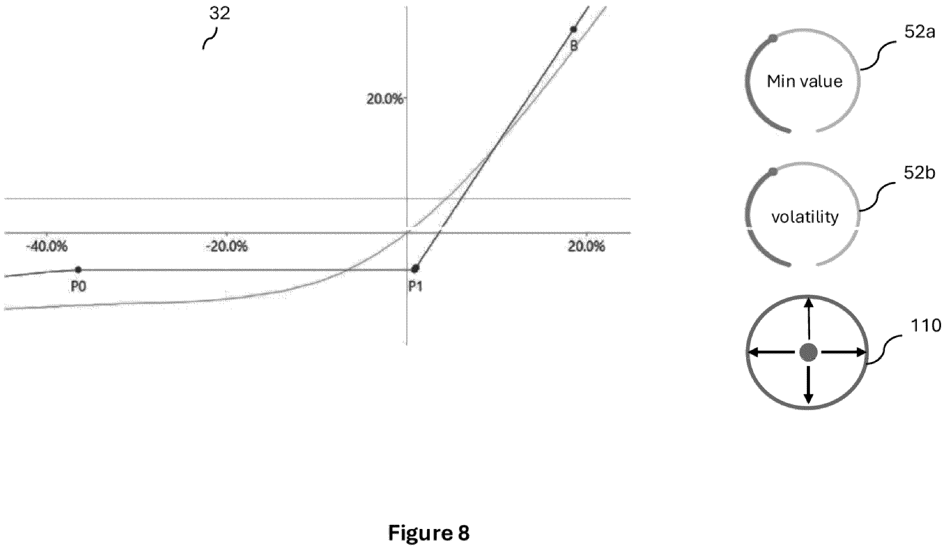

As outlined previously, the response system 10 has two functions: generating a response strategy (in the form of a response graph) and generating multiple parameter instructions for the action controller 20. Firstly, to generate a response graph, the GUI generator 28 generates and displays a GUI on the display touchscreen 16. The GUI includes the response graph but as no user inputs have been received, the response graph is an initial graph profile, for example shown as a flat line (such as y=constant) in the orthogonal axes on the GUI. A user subsequently interacts (touches, swipes) with the displayed GUI to set user inputs. In the described embodiment, two user inputs are set using the GUI. The two different user interactions (gestures) with specific dials (described later) are detected by the detector 24, and the detector 24 converts each user interactions into a numerical value of an associated parameter. The numerical values of the associated parameters, determined by the user inputs, are provided to the parameter setting engine 26. The parameter setting engine retrieves the constraints 33 from the datastore 14 and generates a revised response graph based on the two user inputs and the constraints. It is to be appreciated that the constraints also include the set of relationships between the different parameters. In this embodiment, the set of relationships is in a fixed association with the values of the user inputs. This means that setting the two user inputs defines all of the values of the output parameters, because they are determined by the fixed association of the set of relationships to the user input values. In the embodiments described with reference to **Figures 8** to **13****,** this fixed association of the set of relationships can be varied by use of a third user input.

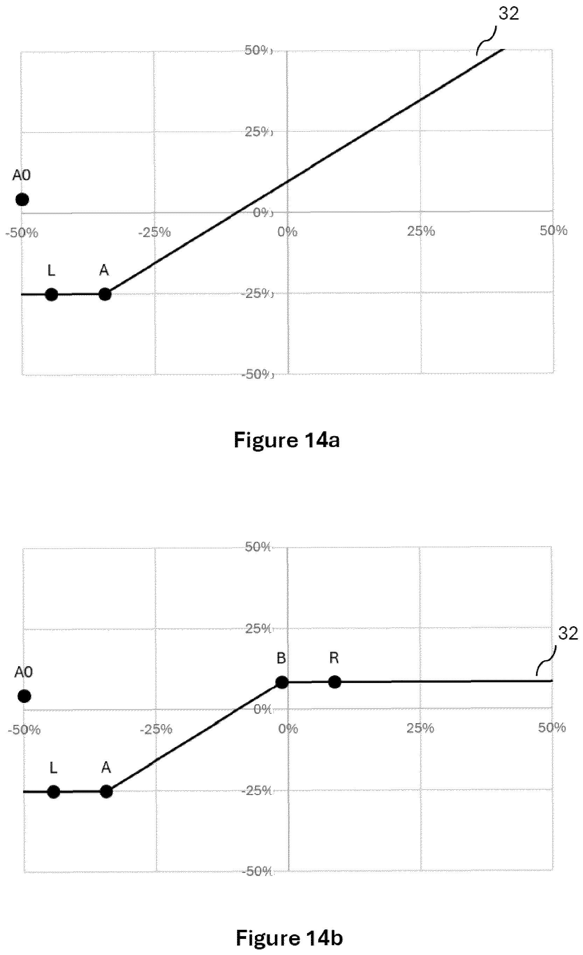

Considering the constraints in greater detail, the parameter setting engine 26 translates the two user inputs into a series of points following a plurality of rules (not shown) determined by the constraints 33. Any number of constraints may be included, which are dependent upon the target system. The points are connected to build the line graph. Any number of points may be generated and used to create the line graph, with the number of points increasing as the line graph becomes more complex. The minimum number of points required to create the line graph is two, which is the simplest scenario, when the line graph is a straight line. In some embodiments five points (namely defining ten variables in two-dimensional space) are used, however there is no upper limit. Examples of how a response graph is built using two user input values and the set of constraints 33 is discussed later with reference to **Figure 4** and **Figure 14****.**

The series of points determined by the parameter setting engine 26 are provided to the GUI generator 28, and the GUI generator 28 then creates the revised line graph by connecting the series of points. As described previously, the line graph is a response profile, and so represents the response strategy. The GUI generator 28 regenerates the GUI comprising the revised response profile and displays the GUI on the touch screen 16. A user views the generated response graph on the touch screen 16 and may further change the response graph shape by interacting with the GUI controls to change the user input values. The time between interacting with the touch screen 16 to provide user inputs and the response graph being displayed on the screen is extremely short and is essentially in real-time. Therefore, the user can see easily the impact any changes in input values have on the graph and edit the response graph in real-time.

The user may continue to edit the user inputs until they are happy with the response graph, and thus the response strategy. In use, the user interacts with the touch screen 16 to approve (accept) the displayed graph. For example, the user may tap an 'accept' button (not shown) on the touch screen 16. The interaction is detected by the detector 24, and the detector notifies the parameter setting engine 26 that the response graph is approved. In response, the parameter setting engine 26 calculates values of a set of parameters 34 (to be converted into a multi-parameter instruction) using the points of the response graph. The set of parameters 34 of the comprise both fixed parameters and variable parameters. The specific way in which the parameters 34 are converted into the multi-parameter instruction, i.e., the equations used are based on the target system which the response strategy is being generated for, with more complex target systems requiring a greater number of parameters 34 and equations, which are defined by the instruction generation algorithms 36. Each algorithm 36 calculates a particular variable that needs to be determined to instruct the target system to take an action. In some embodiments, at least 14 (fourteen) parameters (from seven pairs of co-ordinates of points on the response graph, for example) for the multi-parameter instruction are calculated from the user-defined points on the response graph.

The parameters 34 are calculated based on the response graph 32. As described previously, the generated response graph 32 comprises a plurality of points (as shown in **Figure 2**). The position of the points on the response graph 32 (i.e., the x, y co-ordinates) and are the parameters 34. The approved response graph 32 and the determined parameters 34 are sent to be stored in the datastore 14.

The second function of the response system 10 is to generate multiple parameter instructions for the action controller 20. To generate such instructions, the instruction generator 30 receives the current state value parameter from the feedback system 22. As described previously, the current state value parameter is a value of a particular parameter, in response to which it is desirable for the target system to take some action which results in changing the value of the current state value parameter. The response strategy is generated for the target system to respond to changing values of the current state value parameter.

In use, the instruction generator 30 receives the current state value parameter and retrieves the response graph 32 from the datastore 14. The instruction generator 30 then determines the response that is required corresponding to the received current state value parameter. The current state value parameter provides the value on the x-axis of the response graph. The threshold for providing a particular response is provided by the y-axis value of the response graph. Therefore, the instruction generator 30 determines if the target system needs to respond to the received current state value parameter. A response is required if the y-value corresponding to the received current state value parameter is not equal to the value defined by the response graph. For example, if the volume at a particular frequency band in a received audio signal is lower than defined by the response graph, then an action should be taken (i.e., the target system should respond). To respond to the current state value parameter, the instruction generator 30 retrieves the parameters 34 and instruction generation algorithms 36 from the datastore 14. Using the instruction generation algorithms 36, the instruction generator 30 converts the parameters 34 into a multi-parameter instruction or a set of multi-parameter instructions readable by the action controller 20. The instruction generator 30 sends the multi-parameter instruction(s) to the action controller 20. The multi-parameter instruction(s) may comprise, for example, operation values for different components of the target system, or instructions for a user to take some action in relation to the target system (e.g. turn off/on a component, increase the volume at a certain frequency band). When executed by the action controller 20, the multi-parameter instructions cause the target system to change operation in some way, so that the target system responds in a way dictated by the response graph 32. The effects of the change in operation are typically seen by changes in subsequent values of the current state value parameter.

As described above, embodiments of the present disclosure provide a GUI for generating or regenerating (hereinafter simply referred to as 'generating') the response graph, comprising a plurality of points, using two user inputs. Example GUIs, that may be used to generate the response graph 32 are shown in **Figure 4****.** The illustrated GUI may be generated by the response system 10 of **Figure 1****.** **Figure 4** shows four GUIs 42, 44, 46, 48. Each of the GUIs comprise a response graph 32, and circular user input dials 52a, 52b. When a user first activates (opens) the GUI, the displayed response graph may be the last saved response graph, a standard response graph, or a response graph comprising a horizontal line where y=constant in a conventional orthogonal set of x/y axes. In the illustrated embodiment, each of the GUIs 42, 44, 46, 48 comprise two user input dials 52a, 52b. However, in other embodiments (discussed later) a third user input control is also included. To set an input, the user swipes (drags) the user input dials 52a, 52b on the GUI 42, 44, 46, 48 in a circular motion. The position of each dial 52a, 52b along the circumference of the dial is translated into a numerical value between a minimum and maximum value, the numerical value representing the user input. The minimum and maximum values will differ depending on the target system the response graph is being generated for and are set prior to use of the GUI for designing the response graph. In some embodiments, the ratio between the input dial position and the numerical value generated for that position is non-linear. In other words a first quantum of movement of one of the input dials provides a non-linear second quantum of setting of a variable associated with the input dial. This leads to the user having more control over the input value in certain ranges of movement of the dial. For example, from 10% to 15% on input dial 52a may require a larger movement of the dial than moving input dial 52a from 80% to 85%.

The first input dial 52a allows the user to set the first user input which is a reference parameter. In the described embodiment, the reference parameter is the minimum response value (outcome). In other words, the first input dial 52a allows the user to set the lowest value the response graph 32 reaches on the y-axis (e.g. minimum volume, minimum efficiency). In the GUIs 42, 44, 46, 48, the position of input dial 52a translates to a numerical value of 0.16 (16%), and thus the minimum value of the response graph is -0.16, or -16%.

The second input dial 52b allows the user to set the second user input u, which is an aggregator parameter. The aggregator parameter '*u*' sets the values of a plurality of different parameters using the set of established relationships and constraints between the different parameters. The constraints and set of relationships are defined prior to using the response system 10. The effect of changing u on the shape of the response graph 32 is shown in **Figure 4****,** where GUIs 42, 44, 46, 48 show the response graphs generated for u values of 0.135, 0.360, 0.517, and 0.698 respectively, while the first input (the minimum value) remains at -0.16 (16%).

To generate a response graph, the two user inputs (minimum response, aggregator parameter u) are processed, and the constraints are applied, to generate a series of points. The response graph is then created as a line (in this embodiment a piecewise linear graph) which connects all of the points. The constraints 33 are applied to govern the shape of the response profile. In the illustrated example, multiple constraints are used. These include a minimum and a maximum relative value k, a maximum gradient (set to avoid generating response profiles with excessively volatile outcomes) and an average signal gain, which is derived from the target system. These constraints may be fixed or updated at regular time intervals depending on changes in the target system. Another constraint applied in the illustrated examples is that the area under the graph for a particular range of values of the current state value parameter must be balanced on either side of the average signal gain. Example response graphs are illustrated by the GUIs 42, 44, 46, 48 in **Figure 4****.**

Considering firstly GUI 42. In this example, the first user input (minimum response) is equal to -16% and the second user input u is equal to 0.135. The system 10 first determines a first initialisation point, Point A0 which is set at a value of 50% current state value parameter on the x-axis (the minimum relative value k, defined in the constraints 33). In this case, the current state value parameter is of the percentage change of the underlying value of the parameter. The y-co-ordinate of Point A0 is also determined from the initial constraints 33 of the response system.: the y-co-ordinate of Point A0 is the average signal gain. The second point A is then determined as Point A0 moved by a distance u. The direction of movement is in the negative y direction until the minimum response (-16% in the illustrated example) is reached, and then for values greater than the minimum of 16%, Point A is moved in the positive x direction. For small u values, such as in GUI 42, there is no movement in the positive x direction, as moving the distance u in the y-direction (0.135) does not reach, the minimum response of -16% (0.16). A third point, Point B is then generated at position co-ordinates (A0+*u*, A0). In other words, Point B is positioned at distance u to the right of Point A, at the same y position as initialisation Point A0. Additional points are then generated, with the number of additional points dependent upon the complexity of the response graph. In GUI 42, a further three points are generated (namely six parameters from three pairs of co-ordinates of points on the response graph). A line is created between each point, with the composite line response graph representing the response strategy.

The effect of increasing u on the response graph is shown in GUIs 44, 46, and 48. Compared to GUI 42, the position of Point A in GUI 44 is further to the right (in the positive x direction): the higher u means that the minimum response (-16) (specified by dial 52a) is reached when moving in the negative y-direction, and the remaining distance u was used by moving in the positive x direction.. Increasing u therefore moves the point at which the sloped line of the response starts to the right, thus moving the entire response profile from Point A to the right. The gradient of the line between Points A and B remains constant, and thus the x- and y-co-ordinate values of Point B also increase. This illustrates how increasing a single u parameter has an effect on multiple parameters which determine the shape of the response profile.

When generating the response graph, a constraint of the system is that the area under the response profile on either side of the average signal gain must be balanced, as this is a constraint 33. In both GUIs 42, 44, the above processing is sufficient to achieve a balanced response graph. In other words, moving the position where the sloped line of the response graph starts in the positive x-direction is enough to balance the response graph. In some instances, when the u input is high (for example in GUIs 46, 48), further processing is required to generate points and thus a response graph that follows the balancing constraint.

In GUI 46 *u* is set by the user to a value of 0.517. To balance the response graph Point B is moved diagonally upwards and to the right, that is, the x and y co-ordinates of Point B both increase. However, the gradient between Points A and B does not change. If it is possible to get to balance the area under the response profile either side of the average signal gain by simply by moving Point B in this way, then the process is complete at this point.

At higher values of u, further processing is required. If the response graph is not balanced with Point B at the maximum relative k-value as determined by the constraint 33 , the gradient of the line to the right of Point B is increased. If the gradient to the right of Point B reaches the same as that between Point A and Point B and the response graph is not balanced, then another constraint of a fixed gradient between Points A and B has been reached. Here to accommodate the higher value of u, the gradient of the whole line segment to the right of Point A is increased whilst not increasing the x value of Point B. However, if the gradient of the line A/B exceeds the preset maximum gradient (defined by the constraints 33), the GUI may indicate to the user that the desired value of u is simply not possible, and display a message advising the user to choose a lower value of *u.*

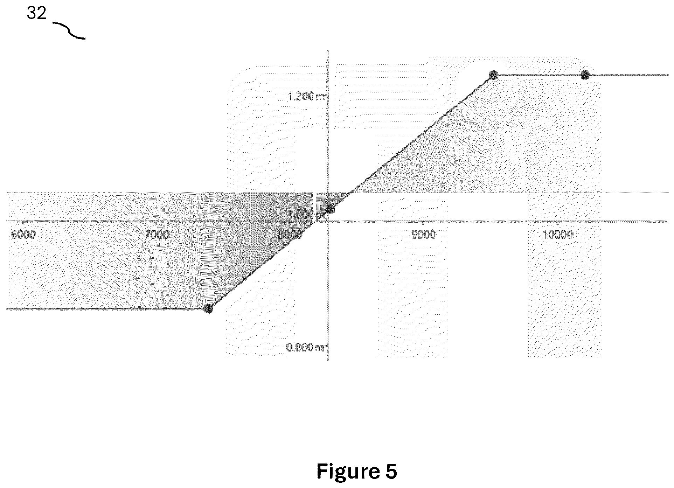

In some embodiments, additional constraints may be used, as illustrated by the response profile in **Figure 5. Figure 5** shows a response profile generated when the plurality of constraints comprises a probability function applied to the response graph (varying along the x-axis). The probability function is shown as a gradient overlay on the graph, with the gradient indicating how likely it is that the y-value reaches the value defined by the response graph. A point, at which there is effectively a zero likelihood that the y-value reaches the value defined by the response graph, acts as a boundary on the graph. The boundary defines the areas under the graph (under the response profile either side of the average signal gain), and so affects how the response profile is balanced (which is another constraint 33 described above). Thus, the probability function comprises a complicated constraint that may be applied by the response system when generating the response graph.

As described by the examples above, in embodiments of the present disclosure two user inputs are used to generate a series of points on a response graph. A line that passes through each of these points is created, where the resultant line graph represents the desired response strategy. The parameter setting engine 26 of **Figure 3** determines the points based on the minimal user inputs, the preset constraints 33 and the parameters which determine the relationships of the different variables, and the GUI generator 28 of **Figure 3** creates the response graph in the GUI using the series of points. Only two user inputs are needed to generate the response graph, even for complex systems. Thus, minimal simple user interactions (in the form of gesture control) with the GUI are required, which is particularly advantageous when the system is implemented in devices with smaller screens, for example in mobile phones.

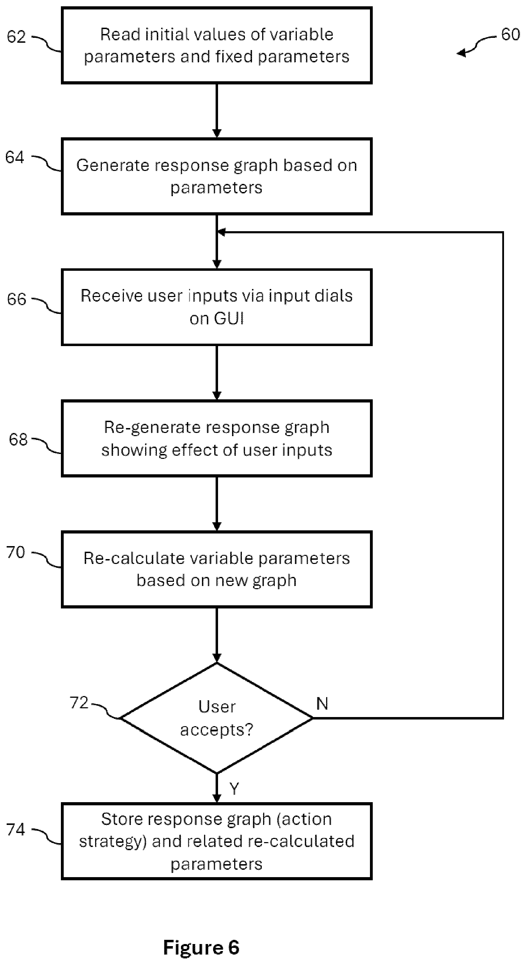

Once a response graph is generated and finalised, a final set of parameters 34 are determined using the response graph. **Figure 6** shows a method 60 of creating the response graph and setting (calculating) corresponding parameters using the GUI in accordance with an embodiment of the present disclosure. The method may be carried out by the response system 10 of **Figure 1****.**

Before a user interacts with the GUI, initial parameters are established and are saved to the data store 14. The parameters may be from a previous use of the response system, or automatic starting values. The method 60 therefore comprises firstly reading, at Step 62, initial values of the parameters 34, and generating, at Step 64, a response graph using the initial values of the parameters. The response graph generated may be the response graph displayed when the user activates the GUI. In other embodiments, the initial response graph displayed when a user opens the GUI is simply a line at y=constant. As described above, a user changes the response graph by interacting with the GUI. Thus, the method 60 further comprises receiving, at Step 66, an indication of user inputs. In some embodiments, only two user inputs are needed, which are provided by user gesticulation commands such as a user circumferentially swiping (setting) two dials on the GUI. In other embodiments (described later), three user inputs are used. The method then comprises re-generating, at Step 68, the response graph using the received user inputs, and then calculating, at Step 70, a set of fixed and variable parameters based on generated response graph. As explained previously, the parameters are calculated based on the position of the points on the response graph. The generated response graph is displayed on the GUI, and the method then comprises determining, at Step 72, if the user accepts the response graph. For example, the user may touch a button on the GUI indicating that the displayed response graph is approved. If the user does not accept the response graph, then the method returns to Step 66, the user interacts with the input dials on the GUI to set new input values, and Steps 68 to 72 are repeated. If, at Step 72, the user accepts the displayed response graph, the method comprises storing, at Step 74, the response graph and the related calculated parameters.

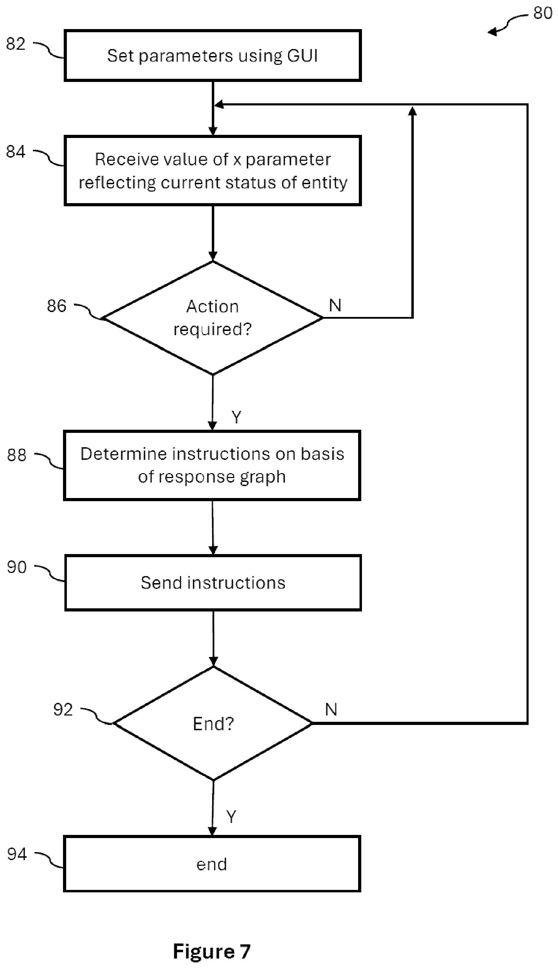

As described previously, the response system according to the present disclosure may also generate instructions for a controller (e.g. action controller 20), so that the target system coupled to the controller operates in accordance with the response graph. A method 80 of generating instructions in accordance with an embodiment of the present disclosure is shown in **Figure 7****.** The method may be carried out by the response system 10 of **Figure 1****.** The method 80 comprises firstly, setting, at Step 82, parameters using the GUI (for example, using the method 60 described by the flowchart in **Figure 6**). Once the parameters are set, the method 80 comprises receiving, at Step 84, a current state value parameter relating to the target system. The current state value parameter is a value of a parameter relating to the status/condition of a condition signal that influences the target system. The current state value parameter is provided on the x-axis of the response graph, and so the received current state value parameter has an x-value. The next step comprises determining, at Step 86, if an action is required. Determining if an action is required comprises using the response graph, and determining if the current state value parameter meets the threshold for responding as defined by the response profile, for the received x-value of the current state value parameter. For example, for a received audio signal relating to the target system, determining if a response is required comprises determining if a particular frequency of the audio signal meets the desired amplitude (volume) defined by the response graph (which represents a desired audio profile). If an action is not required the method repeats Steps 84 and 86, receiving a new value of the current state value parameter and determining if an action is needed. New values of the current state value parameter may be received at set time intervals (pushed), or on request (pulled) by a user. If it is determined, at Step 86, that an action is required, then the method comprises determining, at Step 88, one or more multi-parameter instructions. The multi-parameter instructions are generated using the parameters set at Step 82 and the response graph. Once the instructions are generated, the method comprises sending, at Step 90, the instructions to the controller for execution. In one embodiment, the controller may be the action controller 20 shown in **Figure 1****.** Executing the instructions causes the target system, which is affected by execution of the instructions, to change its operation in some way, or perform specific tasks. The effects of the change in operation of the target system can be seen by changes in subsequent values of the current state value parameter. The method then comprises determining, at Step 92, if the method can end. This may be determined by receiving an indication from the user via the GUI. If the method is not to end, then Steps 84 to 92 are repeated. If it is determined at Step 92 the method can end, then the method ends at Step 94.

In the embodiments described above, the GUI comprises two input elements (input dials 52a, 52b), and two user inputs from the two user inputs are used to generate the response graph. In some embodiments, a third input element may be provided in the GUI. An example GUI comprising three input elements in accordance with an embodiment of the present disclosure is shown in **Figure 8****.** Similar to the GUIs shown in **Figure 4****,** the GUI comprises a response graph 32 and first and second input elements 52a, 52b. The GUI of **Figure 8** further comprises a third input element 110. While the first and second input elements 52a, 52b comprise a dial, the third input element 110 comprises a moveable dot. A user can swipe (move) the dot in any two-dimensional direction within a boundary, for example, within a circle shown in **Figure 8****.** The position of the dot (also referred to as a point object), that is the x- and y-coordinates of the dot, are each transformed into a numerical value between 0 and 1. The numerical values of the x and y parameters are used as further inputs for generating the response graph. Therefore, the GUI shown in **Figure 8** receives four user inputs by interaction with three simple GUI controls. As a result, the user has more control over the response graph, allowing them to easily design complex response strategies.

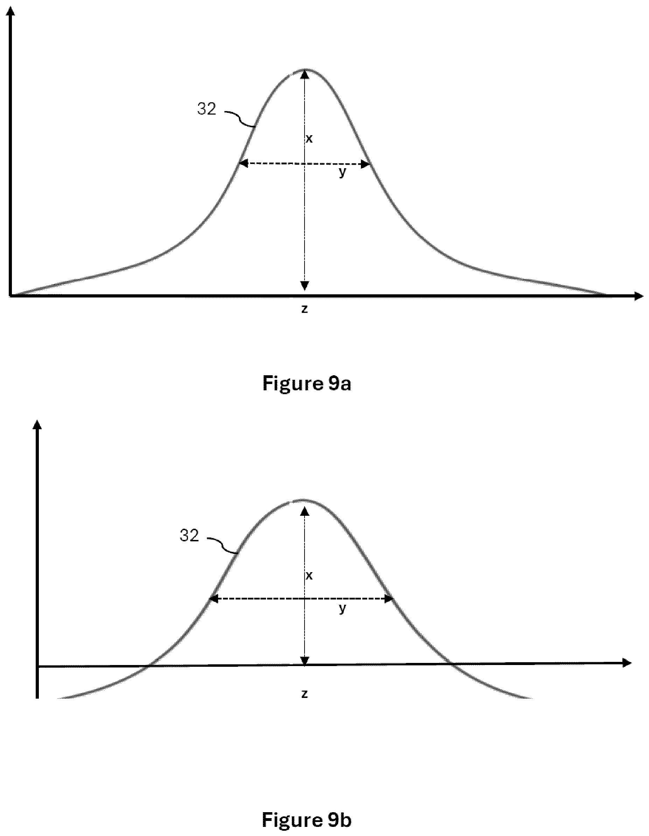

The value of the parameter determined by the third input element 110 affects the way in which the aggregate parameter u (set by input element 52b) sets the values of the plurality of parameters. This is now described in greater detail with reference to **Figures 9a** and **9b. Figure 9a** shows a non-linear response profile 32 with parameters x, y and z describing the shape of the profile. **Figure 9a** has a constraint of the area under the profile being constant. Therefore any user adjustment of x, y and z needs to maintain this value, i.e., the area under the response graph does not change with changes to x, y and z. Therefore, as y increases (via a user moving the moveable dot for example), the whole response graph 32 moves down to compensate for a wider bell curve, to keep the area under the graph constant, as shown by the curve in **Figure 9b****.** Conversely, as the y value parameter decreases, the entire response graph moves up. Thus the x and y parameters provide changes in a plurality of different parameters which define the shape of the entire response curve.

Similarly, as the x value parameter increases, the outer parts of the response graph drop lower, resulting in a steeper curvature for the bell curve. For smaller values of x, the outer parts of the bell curve become higher, flattening the overall curvature of the bell curve of the response graph. Thus, the values of multiple parameters (that are calculated by from the graph) change following a change in one user input, provided by the x-position of the dot. In both the x and y change cases described above, the association between the set of relationships is not fixed but rather is varied by the use of the third user input. This is extremely powerful but easy-to-use way to control complex relationships of multiple parameters for the generation of multiple parameter instructions. This feature enables the user design of the response profile to be simplified and made easier to implement via the GUI.

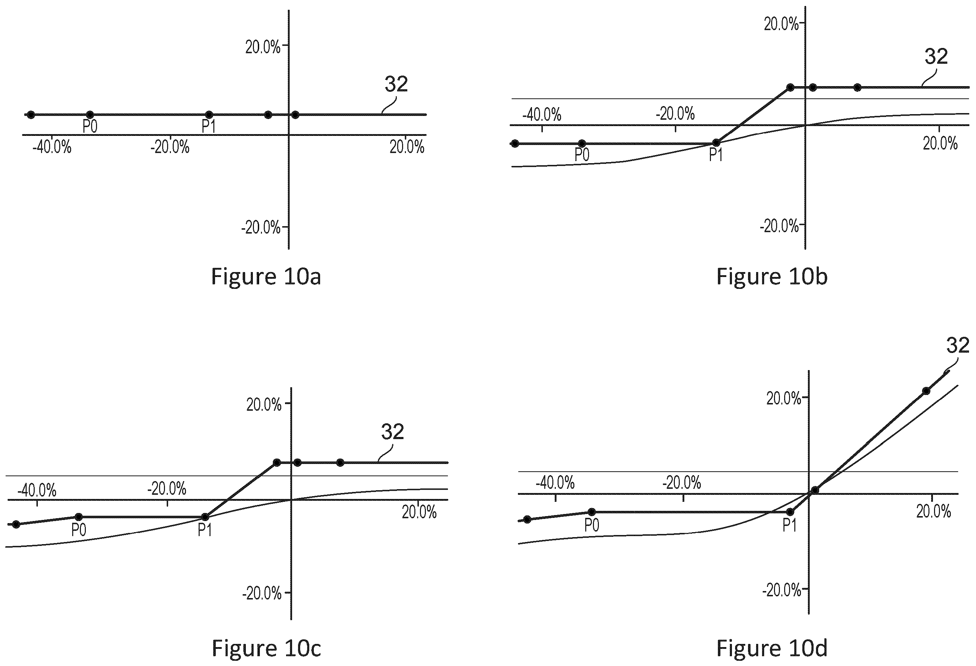

Accordingly, the use of a third input element in the form of a moveable dot changes the way in which an input parameter u affects the entire graph. Using the third input element, (and therefore a third and fourth user input values) allows for more complex response graphs to be designed by incorporating a multitude of different features. Another example process by which a response graph is built using three input elements (and thus four user input values) is shown in **Figures 10a to 10g****.** The same constraints as described previously with reference to **Figure 4** are applied.

Considering firstly **Figure 10a****,** the third input element 110 introduces a protection level to the response graph. The protection level is determined by the numerical value derived from the y co-ordinate of the dot (the fourth user input value). When y is equal to 0, then the protection level is the minimum response (set using the first input element 52a), and when y is equal to 1, the protection level is set to a pre-set maximum for example 15% (which will differ depending on application, and is a constraint, set prior to using the GUI for designing a response graph).

A plateau is also introduced into the response graph by the third input element 110. The plateau is defined by two points P0 and P1, which are also shown in the GUI in **Figure 10a****.** The width of the plateau (the distance in the x-direction between Points P0 and P1) is determined by the numerical value derived from the x-coordinate of the dot. The maximum possible width (when x is zero) is the distance between the minimum and maximum constraints (strikes). The minimum width (when x is equal to a value of 1) is zero. The centre of the plateau is placed such that if the width were to be increased to the maximum, the left end of the plateau (Point P0) would be at the minimum relative k-value (defined by the constraints 33). The gradient to the left of the plateau, that is, the line extending in the negative x-direction from P0, is initially 0. As described previously with respect to **Figure 4****,** constraints are applied in order to constrain the resultant response graph. In the same manner as was used for **Figure 4****,** one constraint used in the present example is that the area under the response graph is balanced on either side of the average signal gain.

The vertical position of the plateau is initially the average signal gain. As u increases (via swiping the second user input dial 52b), the plateau moves in the negative y-direction until the plateau reaches the protection level. The resultant GUI is shown in **Figure 10b****.** As u increases further, the gradient of the line to the left of the plateau increases, as shown in **Figure 10c****,** until the response value (y-value) when x is equal to -100% (a 100% reduction in the current state value) is the minimum response (maximum variation).

Increasing u further increases the width of the plateau. The width of the plateau is extended by moving Point P0 to the right as shown in **Figure 10d****,** whilst leaving point P0 and the gradient to the left of that point unchanged. The positions of P0 and P1, and the gradient to the left of P0, are then fixed as a function of the input four parameters.

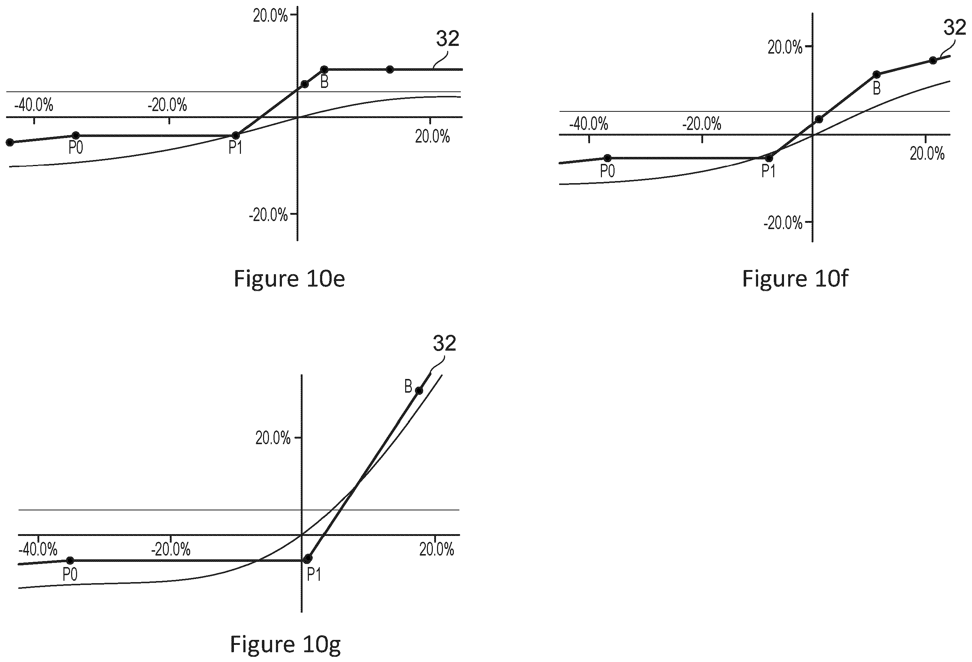

This will give rise to a shape that is not balanced and hence not in accordance with a constraint of the response system. Accordingly the remainder of the response shape is adjusted so as to balance the area under the response profile on either side of the average gain signal to meet the constraint. As with the two-parameter mode, this is achieved by firstly moving a Point B diagonally away from P1 at a gradient of 1. The line to the right of Point B is flat, as shown in **Figure 10e****.** If the response graph is still not balanced, once Point B reaches the maximum permissible predetermined limit (maximum relative k-value, as defined by the constraints 33) (for example, more likely at high u values), then the gradient to the right of Point B is increased as shown in **Figure 10f****.** Once the gradient to the right of Point B is 1, the gradient between P1 and B is also increased to try to meet the area under the graph constraint as shown in **Figure 10g****.** Again, as with the two-parameter mode, if a shape of the response profile with an equal area between the average signal gain and the negative portion of the response line and the average signal gain and the positive portion of the response line cannot be generated, the process is repeated with a lower value of u.

As in the simple mode, the shape of the line can be expressed as a set of numerical parameters, being the x and y co-ordinates of the points that define the response profile line. For example, in **Figure 10e** the shape is defined by five points (P0, P1 and B, a point to the left of P0 and to the right of B to fix the gradient at the left and right), giving a total of ten parameters (each point on the response profile being defined by a pair of x,y co-ordinates).

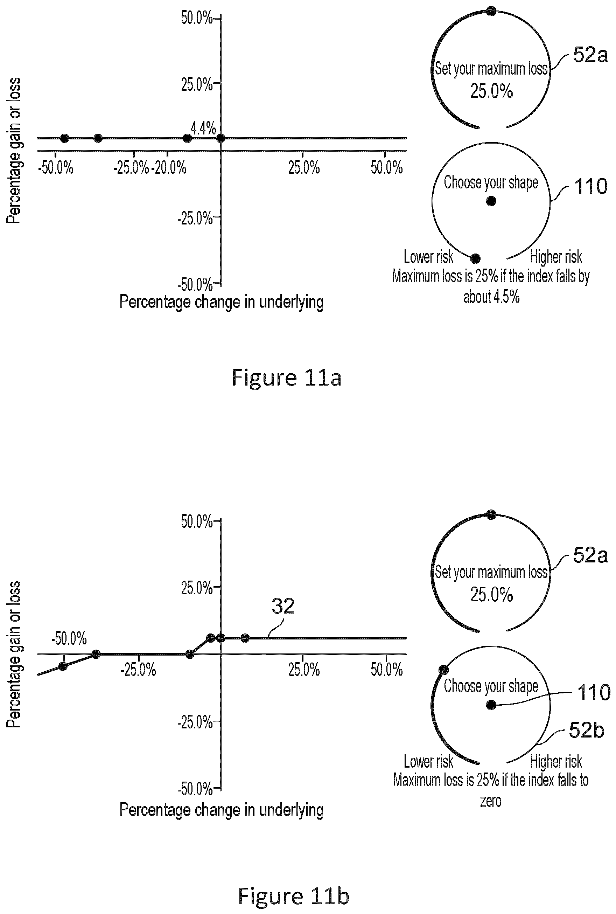

The third and fourth user inputs, derived from the third input element 110, manipulate the relationships between a user input that affects the relationships between multiple parameters (e.g. aggregate parameter u) and the shape of the graph. In other words, manipulation of the value of the pair of coordinate parameters of u alters the set of predetermined relationships with each of the plurality of response profile-determining parameters The ways in which the x/y position of the dot affects the response graph is illustrated in **Figures 11a to 11g****.** In the illustrated embodiment, the moveable dot is shown within input dial 52b, thus input dial 52a is the boundary within which the moveable dot can move. Combining the second input dial 52b and third input element 110 allows the same information to be displayed more clearly on a smaller screen, such as on a mobile phone.

Considering firstly **Figure 11a****,** the first user input 52a (the reference parameter), minimum response, is set to 25%, and *u* is set to 0. Regardless of the position of the central dot 110, when *u* is set to 0, the response profile is flat.

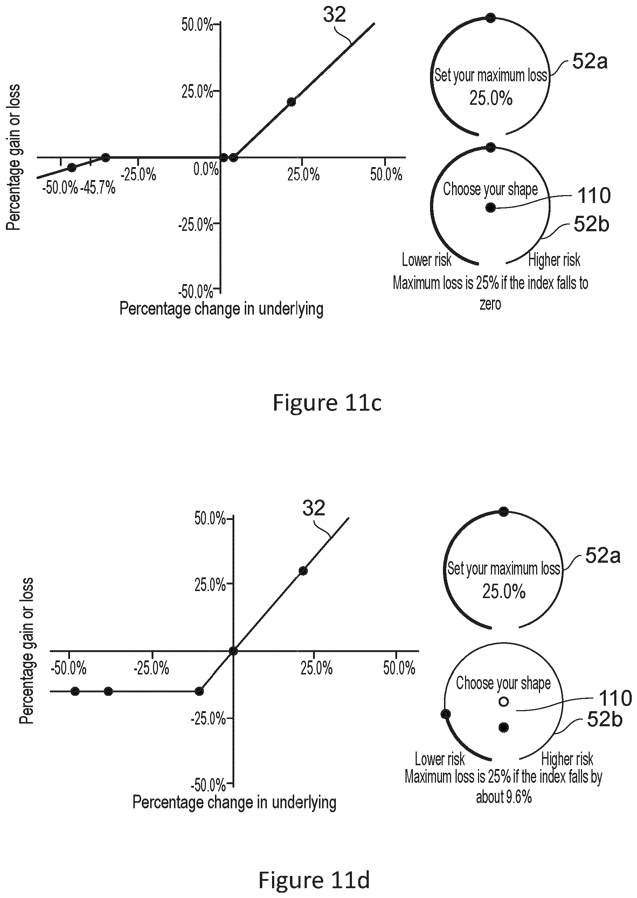

As u increases (the user swipes the input dial 52b), the way in which the response line changes varies greatly depending on the position of the dot. For example, as shown in **Figure 11b****,** the dot is in the centre of input dial 52b. Compared to the response graph shown in **Figure 11a****,** increasing u moves a central plateau in the negative y direction towards zero. The plateau also becomes wider. The line to the left of the plateau moves down towards the maximum loss. As u increases further, the line to the right of the plateau steepens (the gradient increases), as shown in **Figure 11c****.** The response profile is manipulated in this way in order to balance either side of the graph, which is a constraint provided to the system.

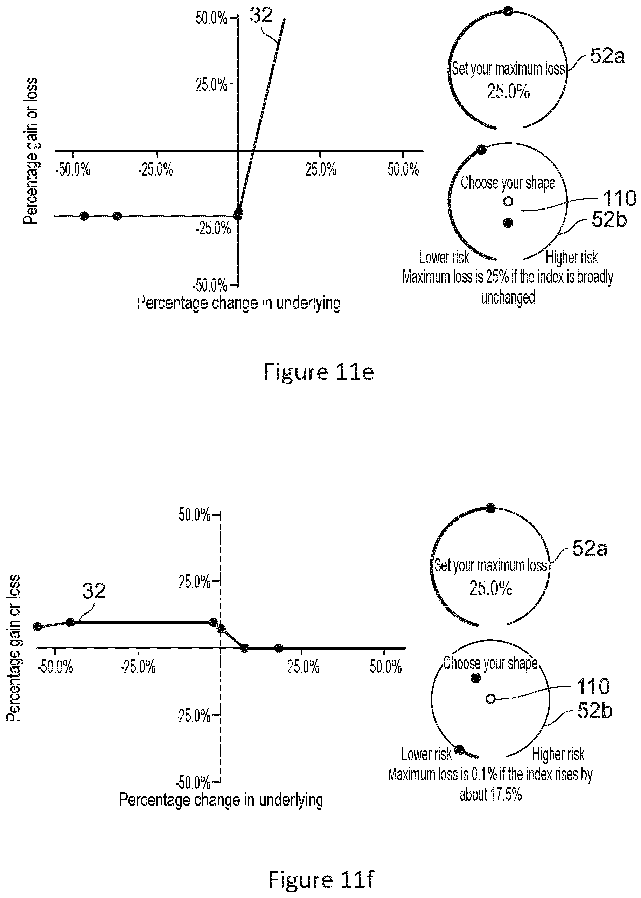

Turning to **Figures 11d** **and** **11e****,** the position of the dot is in the bottom of the range, that is, the input derived from the y co-ordinate (the fourth user input value) of the dot's position is smaller. Reducing the value of the fourth user input, moves the left part of the response line downwards until it reaches the minimum value (-25% in the illustrated example): there is no sloping segment at the far left of the graph. If *u* is increased **(****Figure 11e****),** the gradient to the right of the plateau increases in order to balance the graph (a constraint of the target system).

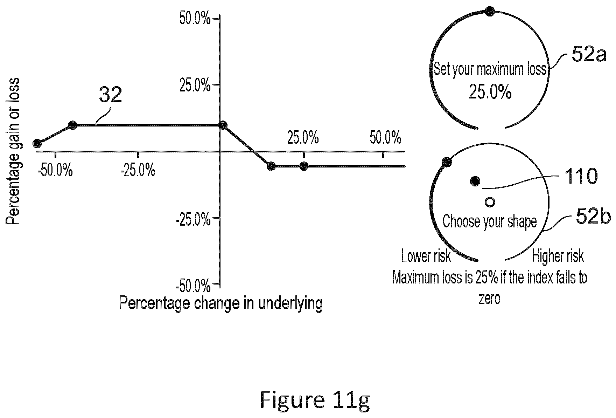

With the dot at the top left of the input dial 52b, as shown in **Figures 11f** and **11g****,** increasing *u* moves both ends of the response line downwards with a corresponding upward movement in the middle.

### Example 1 - Graphic equaliser - Instructions = values for each channel

The GUI of the present disclosure may be used to generate a strategy for operating a graphic equaliser. A graphic equaliser implements a method of audio control, where audio signals are adjusted to achieve a desired audio output. A desired audio output shows the desired audio volume in decibels as a function of the signal frequency in Hertz. Such a function can be approximated by the audio value at a plurality of fixed frequencies. The adjustment comprises selectively changing the volume (amplitude) of the plurality of fixed frequencies in the composite audio signal.

A typical hardware equaliser has approximately ten physical sliders, each associated with a different signal frequency. A user moves the sliders up or down individually in order to adjust gain of the audio signal at different frequencies, as known as channels. A software equaliser typically replicates the appearance of the hardware device, with individual slider controls that the user can drag up and down using a mouse or touchscreen. However, dragging each individual slider (both in hardware and software graphic equalisers) is time consuming, and also requires a high degree of accuracy from the user. Furthermore, the number of different combinations is almost infinite and some combinations are counterproductive or just not possible to implement. For example, where adjacent channels have opposing settings (maximum gain and maximum attenuation respectively), they in effect cancel out the desired effect. Accordingly, to avoid such counterproductive settings of parameters (that will not work practically), constraints are used to control the parameter setting, for example to shape the overall response.

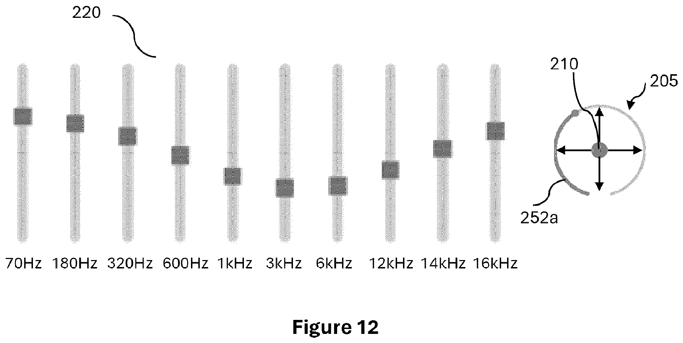

In a further embodiment of the present disclosure, a GUI may be used to generate a response strategy for operation of a graphic equaliser. An example GUI 200 is shown in **Figure 12****.** In the illustrated example, the GUI comprises an input element 205 and a response profile 220. The input element 205 comprises an input dial 252a and a moveable dot 210, such that the movable dot is moveable within a boundary defined by the input dial 252a. The input element 205 is therefore a combination of the input dial 52b and input element 110 shown in **Figure 8****.** While **Figure 12** shows the input dial 252a and the moveable dot 210 combined in a single input element, in some embodiments the input dial 252a and input element 210 are shown as separate dials (as included in **Figure 8****,** with input dial 52b and moveable dot 110).

The input element 205 comprises an input dial 252a for setting a first user input. In the illustrated example, where the GUI 200 is used to generate a response strategy for operating a graphic equaliser in response to an audio signal that is being processed, the first user input defines an aggregator input and also by the limits of its value the maximum response value (i.e., the maximum strength of the audio signal). In other words, considering the response profile as a bell curve, the first user input defines a maximum height of a peak of the bell curve.. Accordingly, moving the input dial 252a on the input element 205 allows the user to alter the maximum signal amplitude value of the audio signal.

The input element 205 further comprises a moveable dot 210. The user can swipe (move) the dot in any direction within the boundary defined by the input dial 252a. The x and y co-ordinates of the dot are each transformed into a numerical value between 0 and 1. The numerical values of the x and y co-ordinate parameters are used as two further inputs for generating the response graph. The numerical value of the x co-ordinate parameter equates to the position of the peak of the bell curve on the x-axis, while the numerical value of the y co-ordinate parameter equates to the width of the bell curve. Accordingly, using two user interactions, three user inputs for the GUI are determined: a numerical value indicative of the maximum response, the x-value of the dot, and the y-value of the dot.

The system also uses a set of constraints, to govern the shape of the generated response profile. In the present embodiment, one constraint is that the average signal gain of the response profile is zero.

A response profile is then generated based on the user inputs following the constraints. In the illustrated example, the response profile comprises a series of points, which are the gain values determined for each of the frequency channels using the user inputs. Accordingly, the response profile shows the adjustment function for the graphic equaliser. As described previously, the user can adjust the user inputs using the input element 205, and the response profile 220 will update on the GUI 200 substantially in real time.

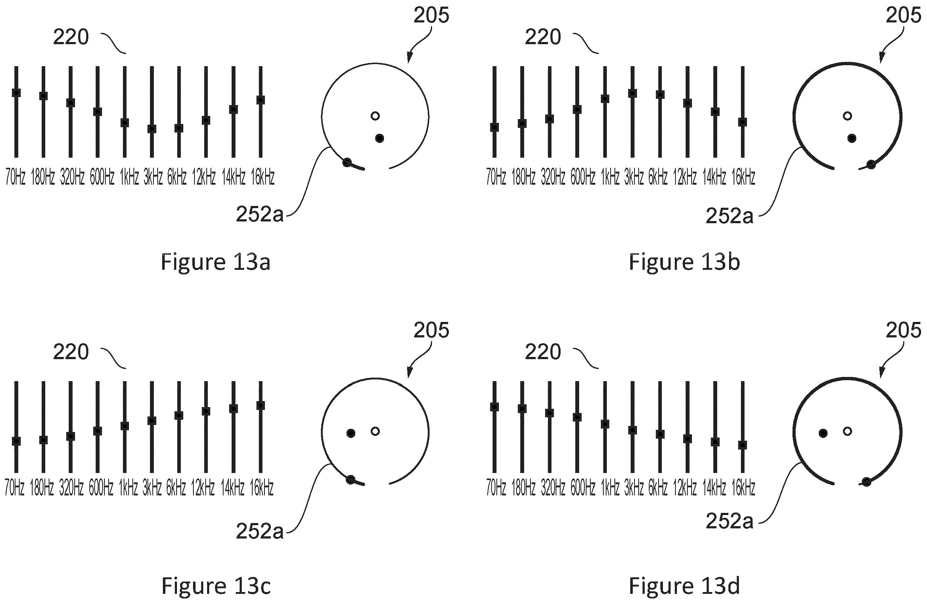

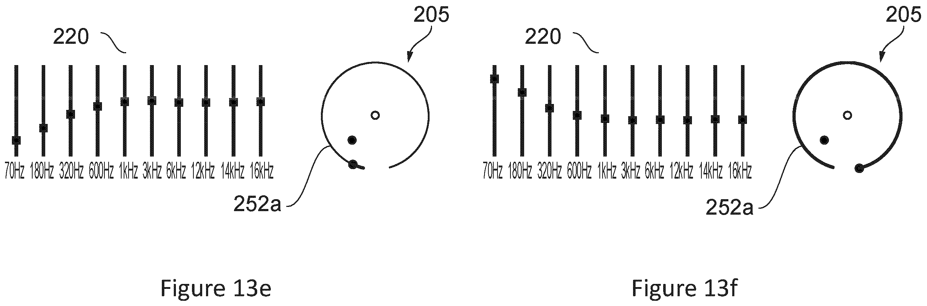

As described, the user inputs are interlinked. The effect that the dial position (input dial 252a) has on the shape of the adjustment function is very sensitive to the position of the moveable dot. Example GUIs showing how the shape of the response profile (adjustment function) changes as a result of changing dial position is illustrated in **Figures 13a to 13f****.** For example, the adjustment function may consist of a central 'bump'. As described, the position of the dot 210 determines the x co-ordinate position of the peak of the bump and the width of the bump, and the dial 252a determines the height of the bump. For example, the adjustment may consist of moving the central bump up and down using the dial **(****Figure 13a** and **13b****);** rotating the whole response line using the dial **(****Figure 13c** and **13d****)** (a bump centred at the far left or right will appear as a rotation when moving the dial if the bump is wide); or moving one end of the response line up and down, while keeping the rest of the response line flat (this occurs when the bump is narrow) **(****Figure 13e** and **13f****).**

As described above the user may continue to adjust the response profile by swiping the user inputs. Once the user accepts the response profile, a set of parameters are determined from the graph (the instruction parameters are the co-ordinates of the points on the graph, equivalent to the settings of the graphic equaliser at each of the frequency channels), and then stored. In the described embodiment, when generating a response profile for a graphic equaliser, the parameters corresponding to the x-co-ordinates of the points on the graph are fixed (discrete predetermined values), as these correspond to the frequency channels of the equaliser.

The resultant response profile represents the desired audio profile to be applied to the audio signal by the graphic equaliser. Once the response profile is created, instructions are generated for controlling the graphic equaliser. The response system (e.g. the response system 10 of **Figure 1**) receives a status/condition of the audio signal. In the present example, the response system may receive one or more frequencies of an audio signal detected by the graphic equaliser. The received frequencies are used as the x-values, and the response graph is used to determine the desired amplification output (y-value) at each predetermined frequency to compensate for the received frequencies not aligning with the desired frequency profile. If the received audio signal does not match the y-value at the particular frequency, then the calculated parameters are used to generate a set of instructions enabling the graphic equaliser to change its response to condition the audio signal into the desired frequency profile. The instructions comprise slider values (amplification levels) for each individual frequency band in the graphic equaliser. Thus, the graphic equaliser is instructed to change its frequency response at each of the predetermined frequencies to generate an audio output in line with the response graph.

### WORKED EXAMPLE OF PROFILE CREATION AND INSTRUCTION GENERATION:

The following sets out a worked example of an embodiment of the present disclosure to illustrate the manner in which the GUI of the response system can be used to with simply two user inputs (for the reference parameter and the aggregator parameter) to generate a plurality of parameters for defining the shape of the response profile. The response profile then being used to define the multiple- parameter instructions for the target system.

| **Initial user inputs (constraints)** | | | |
|---|---|---|---|
| Response Period (years) | period | 1.000 | |
| Resource amount (units) | notional | 1,000,000 | |

| **Interactive user inputs (Via GUI)** | | | |
|---|---|---|---|
| Reference Parameter | mL | 25.0% | |
| Aggregator Parameter | u | 0.450 | |

| **Fixed inputs(constraints)** | | | |
|---|---|---|---|
| Minimum relative value k | kmin | -50.0% | |
| Response value taper threshold | RVTaper | 2.00% | |
| Minimum response value | RVmin | 0.20% | |
| Maximum gradient | maxGradient | 6.000 | |

| **Inputs from Signal** | | | |
|---|---|---|---|
| Average Signal Gain | ASG | 4.5% | Derived from Signal |
| Maximum value taper threshold | kmaxTaper | 6.6% | k value such that response value equals RVTaper (constraint) |
| Maximum relative value k | kmax | 17.3% | k value such that response value equals RVLimit (constraint) |

| **Construction of left-hand part of response profile** as **shown in** **Figure 14A** | | | |
|---|---|---|---|
| Coordinates of point A0 | A0x | -50.0% | =kmin |
| | A0y | 4.5% | =ASG |
| Vertical distance from A0 to A | Av | 29.5% | =MIN (u, ASG + mL) |
| Horizontal distance from A0 to A | Ah | 15.5% | =u-Av |
| Coordinates of point A | Ax | -34.5% | =A0x+Ah |
| | Ay | -25.0% | =A0y-Av |
| Point L (to fix gradient to left of point A) | Lx | -44.5% | =Ax-0.1 |
| | Ly | -25.0% | =Ay |
| Resource available with min response at Ay | Resource available | 28.2% | =1-(1+Ay)/(1+ASG) |
| Value of response at A | RVA | 33.9% | Derived from Signal |
| Response Ratio (gradient of line to right of A) | Ratio R | 1.000 | =MAX (1, Resource available / RVA) |
| Resource required to support response profile in Fig 1A | RR | 5.6% | =RVA * Ratio R - Resource available |

In order to meet the constraint of available resource, the shape of the response profile needs to be adjusted by adapting (reducing) the response to the right of Point A see **Figure 14A****.**

### Capped shape

| **Check constraints** | |
|---|---|
| Response Ratio within limit | TRUE |
| Balanced Response | TRUE |

### Adjustment for meeting balanced response profile constraint

### (Figure 14B)

To meet the **minimum response value** parameter, the response has to have a value which is greater than the RVmin (or equivalently with a k value greater than kmax).

Also it is desired to avoid having a sharp cutoff in the response profile where a small movement of the user dial on the GUI gives a completely different shape.

The Response Ratio = 1.0 if its k value is to the left of RVTaper, and zero if its k value is to the right of kmax, with a linear taper between the two.

The value of such a response (value times response ratio) as a function of its k value can be tabulated, and the k value at which the response has a given value can be interpolated.

| | | | |
|---|---|---|---|
| K value at which balanced response has required value | kBR | -1.2% | Interpolated from (Response Value x Response Ratio) as function of k value |
| Value of response at kBR | RVBR | 5.6% | |
| Balance Response Ratio | BRR | 1.000 | =1 - MAX(0, MIN(1, (kBR - kmaxTaper) / (kmax - kmaxTaper))) |
| Response Value | | 5.6% | |
| Remaining net resource for balanced response | | 0.0% | =Resource required - BRR * RVBR |
| Coordinates of Point B | Bx | -1.2% | =kBR |
| | By | 8.4% | = Ay + (kBR - Ax) * Ratio R |
| Point R (to fix gradient to right of point B) | Rx | 8.8% | =Bx + 0.1 |
| | Ry | 8.4% | = By +0.1 * (Ratio R - BRR) |

The adjusted shape is shown in **Figure 14B****.**

The parameters used for the response instructions to the target system include the x, y co-ordinates of the points L, A, B and R (eight parameters) generated from an input of two parameters from the GUI.

The present disclosure may be used in a plurality of different applications where a target system can be instructed to respond in accordance with a user-configurable response system. For example, the present disclosure may be used to generate an efficiency monitoring and responding strategy for a fuel cell control system, where the strategy shows the desired efficiency (y-axis) of the fuel cell for different values of humidity (x-axis).

In another example, the GUI of the present disclosure may be used to generate a response strategy in a multi-parameter asset trading application. In such an example, the complex response strategy may be an options strategy with tens to hundreds of parameters, where different options are traded dependent upon the underlying price of an asset. The response graph therefore may show profit (y-axis) for different values of the underlying asset and the system of the present embodiments may simplify the complex multi-parameter response profile creation and strategy execution.

Having described several exemplary embodiments of the present embodiments and the implementation of different functions of the device in detail, it is to be appreciated that the skilled addressee will readily be able to adapt the basic configuration of the system to carry out described functionality without requiring detailed explanation of how this would be achieved. Therefore, in the present specification, several functions of the system have been described in different places without an explanation of the required detailed implementation as this not necessary given the abilities of the skilled addressee to implement functionality into the system.

Furthermore, it will be understood that features, advantages, and functionality of the different embodiments described herein may be combined where context allows without departing from the scope of the disclosure herein.

Turning now to other embodiments, it will be appreciated that the method 60 or the method 80 may be embodied in a computer program. For example, a computer program product may comprise a computer readable medium, the computer readable medium having computer readable code embodied thereon. The computer readable code can be configured such that, on execution by a suitable computer or processor, the computer or processor is caused to perform the method or methods described herein (such as the method 60 or method 80).

A computer program may take different forms, for example, source code, compiled code, executable code, or any other type of code. It will be appreciated that the source code of computer programs may be written in a wide variety of different programming languages, and may take different architectural designs. For example, the functionality described herein may be split across various different sub-routines. Furthermore, the skilled person will appreciate that many different ways of splitting the functionality between the different sub-routines will be possible. The sub-routines may be stored together in one executable file to form a self-contained program. Furthermore, computer programs may call external and/or standard libraries of computer code for performing certain sub-tasks associated with the functionality described herein.

In another embodiment, there is a computer program product comprising non-transitory computer readable media, having stored thereon a computer program as described above. Examples of computer readable media include, but are not limited to: ROM, such as a CD ROM, a semi-conductor ROM or a magnetic recording medium such as a hard disk.

In another embodiment, there is a carrier containing a computer program. Examples of carriers include but are not limited to an electronic signal, optical signal, radio signal, computer storage medium, or similar. The carrier of a computer program may be any entity or device (e.g. hardware) capable of carrying the program. As an example, a carrier may be a computer readable media as described above. In other examples a carrier may be a transmissible carrier such as an electronic or optical signal, which may be conveyed via electrical or optical cable or by radio or other means.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these claims cannot be used to advantage. Any reference signs in the claims should not be construed as limiting the scope. The invention is defined by the appended claims.

## Claims

1. A Graphical User Interface (GUI) generator (28) configured to determine values of a plurality of response-profile defining parameters and to generate a displayable GUI, the GUI generator (28) being configured to generate a GUI comprising:
a first user-controllable slider object (52b) for setting a value of an aggregator parameter, wherein the aggregator parameter has a set of predetermined relationships with each of a plurality of response profile-defining-parameters; and
a two-dimensional response graph (32) of the current state value of a signal being handled by a target system against a desired response parameter, the two-dimensional graph (32) showing a multiple-parameter response profile generated by:
i) a value of a reference parameter;
ii) a value of the aggregator parameter, which in turn determines the values of the plurality of response-defining parameters; and
iii) a set of predetermined constraints (33);
wherein the value of the reference parameter determines a reference point on the two-dimensional graph (32) and the value of the aggregator parameter and the set of predetermined constraints (33) determine the shape of the entire response profile with respect to the reference point for different values of the current state value;
wherein the GUI generator (28) is configured to provide the multiple-parameter response profile to a parameter setting engine (26) to enable generation of the multiple-parameter instruction in response to the current state value of the signal using the multiple-parameter response profile.

2. . The GUI generator of Claim 1, further comprising a second user-controllable slider control object (52a) for setting the value of the reference parameter.

3. . A computer-implemented response system (10) configured to create a multiple-parameter response profile to generate a multiple-parameter instruction for a target system to respond to a current state value of a signal being handled by the target system, the response system (10) comprising:
the Graphical User Interface (GUI) generator (28) of Claim 1, the GUI further comprising: a second user-controllable slider control object (52a) for setting a value of a reference parameter;
the parameter setting engine (26) configured to generate the multiple-parameter instruction; and
a communication engine (30) for transmitting the multiple-parameter instruction to the target system to implement a response to the current state value of the signal.

4. . The computer-implemented response system (10) of Claim 3, wherein variation of the value of the first or second user-controlled slider objects (52b, 52a) results in real-time variation of the two-dimensional graph (32) to illustrate the effect of the user-determined value of the reference parameter or the user-determined value of the aggregator parameter on the multiple-parameter response profile.

5. . The computer-implemented response system (10) of Claim 3 or 4, wherein the first and second user-controlled slider objects (52b, 52a) each comprise circumferential sliders.

6. . The computer-implemented response system (10) of any of Claims 3 to 5, wherein one of the first and second sliders (52b, 52a) is configured such that a first quantum of movement of one of the first and second sliders (52b, 52a) provides a non-linear second quantum of setting of a variable associated with the one of the first and second sliders (52b, 52a).

7. . The computer-implemented response system (10) of any of Claims 3 to 6, wherein the GUI further comprises a user-controlled point object (110) for defining a pair of coordinate parameters, the point object being movable within the GUI in two dimensions, wherein the value of the pair of coordinate parameters alters the set of predetermined relationships with each of the plurality of response profile-determining parameters.

8. . The computer-implemented response system (10) of Claim 7, wherein the pair of coordinate parameters defined by the user-controlled point object (110) defines coordinate values in orthogonal directions.

9. . The computer-implemented response system (10) of Claim 6 or 7 as dependent on Claim 5, wherein the user-controlled point object (110) is positioned within one of the circumferential sliders and has a range of movement determined by an area defined by the circumferential slider.

10. . The computer-implemented response system (10) of any of Claims 3 to 9, wherein the computer-implemented system (10) is embodied within a mobile device (18) having a touch screen (16) with a screen size diagonal smaller than 18 centimetres.

11. . The computer-implemented response system (10) of any of Claims 3 to 10, wherein the GUI generator (28) is configured to determine a minimum of four points on the response profile defining eight variables in two-dimensional space or a minimum of five points on the response profile defining ten variables in two-dimensional space.

12. . The computer-implemented response system (10) of any of Claims 3 to 11, wherein the GUI generator (28) is configured generate the response profile as a piecewise linear function.

13. . The computer-implemented response system (10) of any of Claims 3 to 12, wherein the constraints (33) define:
i) limits of a gradient of a portion of the response profile; or
ii) an average gain about a determined level of the response profile; or
iii) an amount of resource available to be used in generating the multiple-parameter instruction; or
iv) a maximum or a minimum of any profile-determining parameter; or
v) a probability function applied across the response profile.

14. . A computer-implemented method (60) of determining values of a plurality of response-profile defining parameters and generating a displayable Graphical User Interface (GUI), the method comprising:
detecting (66) a first user input at a first user-controllable slider object of the GUI, the first user input being an adjustment of the first user-controllable slider object setting a value of an aggregator parameter, wherein the aggregator parameter has a set of predetermined relationships with each of the plurality of response-defining parameters;
generating (68) a two-dimensional graph of current state values of a signal being handled by a target system against values of a desired response parameter, the two-dimensional graph showing the multiple-parameter response profile generated by:
i) the value of a reference parameter;
ii) the value of the aggregator parameter which in turn determines the values of the plurality of response-defining parameters; and
iii) a set of predetermined constraints;
wherein the value of the reference parameter determines a reference point on the two-dimensional graph and the value of the aggregator parameter and the set of predetermined constraints determine the shape of the entire response profile with respect to the reference point for different values of the current state value; and
providing the multiple-parameter response profile to a parameter setting engine to enable generation of the multiple-parameter instruction in response to the current state value of the signal using the multiple-parameter response profile.

15. . A computer-implemented method (80) of creating a multiple-parameter response profile to be used to generate a multiple-parameter instruction for a target system to respond to a current state value of a signal being handled by the target system, the method comprising:
generating a Graphical User Interface (GUI) according to the method (60) of Claim 14, further comprising
detecting a second user input at a second user-controllable slider control object of the GUI, the second user input being an adjustment of the second user-controllable slider control object setting a value of a reference parameter;
generating (88) the multiple-parameter instruction in response to the current state value of the signal using the multiple-parameter response profile; and
transmitting (90) the multiple-parameter instruction to the target system to implement a response to the current state value of the signal.

## Patentansprüche

1. Grafische-Benutzeroberfläche-Generator (Graphic User Interface, GUI-Generator) (28), konfiguriert zum Bestimmen von Werten einer Vielzahl antwortprofildefinierender Parameter und zum Generieren einer anzeigbaren GUI, wobei der GUI-Generator (28) konfiguriert ist zum Generieren einer GUI, umfassend:
ein erstes benutzersteuerbares Schiebereglerobjekt (52b) zum Einstellen eines Werts eines Aggregatorparameters, wobei der Aggregatorparameter einen Satz vorab bestimmter Beziehungen zu jedem einer Vielzahl antwortprofildefinierender Parameter aufweist; und
ein zweidimensionales Antwortdiagramm (32) des aktuellen Zustandswerts eines Signals, das von einem Zielsystem anhand eines gewünschten Antwortparameters verarbeitet wird, wobei das zweidimensionale Diagramm (32) ein Mehrparameterantwortprofil zeigt, das generiert wurde durch:
i) einen Wert eines Referenzparameters;
ii) einen Wert des Aggregatorparameters, der wiederum die Werte der Vielzahl antwortdefinierender Parameter bestimmt; und
iii) einen Satz vorab bestimmter Einschränkungen (33);
wobei der Wert des Referenzparameters einen Referenzpunkt auf dem zweidimensionalen Diagramm (32) bestimmt und der Wert des Aggregatorparameters und der Satz vorab bestimmter Einschränkungen (33) die Form des gesamten Antwortprofils in Bezug auf den Referenzpunkt für unterschiedliche Werte des aktuellen Zustandswerts bestimmen;
wobei der GUI-Generator (28) konfiguriert ist zum Bereitstellen des Mehrparameterantwortprofils für ein Parametereinstellungsmodul (26), um das Generieren der Mehrparameteranweisung als Antwort auf den aktuellen Zustandswert des Signals mittels des Mehrparameterantwortprofils zu ermöglichen.

2. GUI-Generator nach Anspruch 1, ferner umfassend ein zweites benutzersteuerbares Schiebereglerobjekt (52a) zum Einstellen des Werts des Referenzparameters.

3. Computerimplementiertes Antwortsystem (10), konfiguriert zum Erstellen eines Mehrparameterantwortprofils, um eine Mehrparameteranweisung zu generieren, damit ein Zielsystem auf einen aktuellen Zustandswert eines durch das Zielsystem verarbeiteten Signals antwortet, wobei das Antwortsystem (10) umfasst:
den Grafische-Benutzeroberfläche-Generator (Graphic User Interface, GUI-Generator) (28) nach Anspruch 1, wobei die GUI ferner umfasst: ein zweites benutzersteuerbares Schiebereglerobjekt (52a) zum Einstellen eines Werts eines Referenzparameters;
das Parametereinstellungsmodul (26), konfiguriert zum Generieren der Mehrparameteranweisung; und
ein Kommunikationsmodul (30) zum Übermitteln der Mehrparameteranweisung an das Zielsystem, um eine Antwort auf den aktuellen Zustandswert des Signals umzusetzen.

4. Computerimplementiertes Antwortsystem (10) nach Anspruch 3, wobei Variationen des Werts des ersten oder des zweiten benutzergesteuerten Schiebereglerobjekts (52b, 52a) zu Echtzeitvariationen des zweidimensionalen Diagramms (32) führen, um den Effekt des vom Benutzer bestimmten Werts des Referenzparameters oder des vom Benutzer bestimmten Werts des Aggregatorparameters auf dem Mehrparameterantwortprofil darzustellen.

5. Computerimplementiertes Antwortsystem (10) nach Anspruch 3 oder 4, wobei das erste und das zweite benutzergesteuerte Schiebereglerobjekt (52b, 52a) jeweils umlaufende Schieberegler umfassen.

6. Computerimplementiertes Antwortsystem (10) nach einem der Ansprüche 3 bis 5, wobei einer des ersten und des zweiten Schiebereglers (52b, 52a) derart konfiguriert ist, dass eine erste Bewegungsänderung eines des ersten und zweiten Schiebereglers (52b, 52a) eine nichtlineare zweite Einstellungsänderung einer mit dem einen des ersten und zweiten Schiebereglers (52b, 52a) verbundenen Variable bewirkt.

7. Computerimplementiertes Antwortsystem (10) nach einem der Ansprüche 3 bis 6, wobei die GUI ferner ein benutzergesteuertes Punktobjekt (110) zum Definieren eines Paars Koordinatenparameter umfasst, wobei das Punktobjekt innerhalb der GUI zweidimensional bewegbar ist, wobei der Wert des Paars Koordinatenparameter den Satz vorab bestimmter Beziehungen mit jedem der Vielzahl antwortprofilbestimmender Parameter ändert.

8. Computerimplementiertes Antwortsystem (10) nach Anspruch 7, wobei das durch das benutzergesteuerte Punktobjekt (110) definierte Paar Koordinatenparameter Koordinatenwerte in orthogonalen Richtungen definiert.

9. Computerimplementiertes Antwortsystem (10) nach Anspruch 6 oder 7 in Abhängigkeit von Anspruch 5, wobei das benutzergesteuerte Punktobjekt (110) innerhalb einem der umlaufenden Schieberegler positioniert ist und einen Bewegungsradius aufweist, der durch einen durch den umlaufenden Schieberegler definierten Bereich bestimmt wird.

10. Computerimplementiertes Antwortsystem (10) nach einem der Ansprüche 3 bis 9, wobei das computerimplementierte System (10) innerhalb einer mobilen Vorrichtung (18) mit einem Berührungsbildschirm (16) ausgebildet ist, dessen Bildschirmdiagonale unter 18 Zentimetern liegt.

11. Computerimplementiertes Antwortsystem (10) nach einem der Ansprüche 3 bis 10, wobei der GUI-Generator (28) konfiguriert ist zum Bestimmen von mindestens vier Punkten auf dem Antwortprofil, die acht Variablen im zweidimensionalen Raum definieren, oder von mindestens fünf Punkten auf dem Antwortprofil, die zehn Variablen im zweidimensionalen Raum definieren.

12. Computerimplementiertes Antwortsystem (10) nach einem der Ansprüche 3 bis 11, wobei der GUI-Generator (28) konfiguriert ist zum Generieren des Antwortprofils als stückweise lineare Funktion.

13. Computerimplementiertes Antwortsystem (10) nach einem der Ansprüche 3 bis 12, wobei die Einschränkungen (33) definieren:
i) Grenzen eines Gradienten eines Teils des Antwortprofils; oder
ii) eine durchschnittliche Zunahme um eine bestimmte Stufe des Antwortprofils; oder
iii) eine Ressourcenmenge, die zum Generieren der Mehrparameteranweisung verfügbar ist; oder
iv) ein Maximum oder ein Minimum eines beliebigen profilbestimmenden Parameters; oder
v) eine Wahrscheinlichkeitsfunktion, die über das Antwortprofil angewendet wird.

14. Computerimplementiertes Verfahren (60) zum Bestimmen von Werten einer Vielzahl antwortprofildefinierender Parameter und Generieren einer anzeigbaren grafischen Benutzeroberfläche (Graphic User Interface, GUI), wobei das Verfahren umfasst:
Erkennen (66) einer ersten Benutzereingabe an einem ersten benutzersteuerbaren Schiebereglerobjekt der GUI, wobei die erste Benutzereingabe eine Anpassung des ersten benutzersteuerbaren Schiebereglerobjekts ist, das den Wert eines Aggregatorparameters einstellt, wobei der Aggregatorparameter einen Satz vorab bestimmter Beziehungen zu jedem der Vielzahl antwortdefinierender Parameter aufweist;
Generieren (68) eines zweidimensionalen Diagramms der aktuellen Zustandswerte eines Signals, das von einem Zielsystem anhand von Werten eines gewünschten Antwortparameters verarbeitet wird, wobei das zweidimensionale Diagramm das Mehrparameterantwortprofil zeigt, das generiert wurde durch:
i) den Wert eines Referenzparameters;
ii) den Wert des Aggregatorparameters, der wiederum die Werte der Vielzahl antwortdefinierender Parameter bestimmt; und
iii) einen Satz vorab bestimmter Einschränkungen;
wobei der Wert des Referenzparameters einen Referenzpunkt auf dem zweidimensionalen Diagramm bestimmt und der Wert des Aggregatorparameters und der Satz vorab bestimmter Einschränkungen die Form des gesamten Antwortprofils in Bezug auf den Referenzpunkt für unterschiedliche Werte des aktuellen Zustandswerts bestimmen; und
Bereitstellen des Mehrparameterantwortprofils für ein Parametereinstellungsmodul, um das Generieren der Mehrparameteranweisung als Antwort auf den aktuellen Zustandswert des Signals mittels des Mehrparameterantwortprofils zu ermöglichen.

15. Computerimplementiertes Verfahren (80) zum Erstellen eines Mehrparameterantwortprofils, um eine Mehrparameteranweisung zu generieren, damit ein Zielsystem auf einen aktuellen Zustandswert eines durch das Zielsystem verarbeiteten Signals antwortet, wobei das Verfahren umfasst:
Generieren einer grafischen Benutzeroberfläche (Graphic User Interface, GUI) nach dem Verfahren (60) nach Anspruch 14, ferner umfassend
Erkennen einer zweiten Benutzereingabe an einem zweiten benutzersteuerbaren Schiebereglerobjekt der GUI, wobei die zweite Benutzereingabe eine Anpassung des zweiten benutzersteuerbaren Schiebereglerobjekts ist, das den Wert eines Referenzparameters einstellt;
Generieren (88) der Mehrparameteranweisung als Antwort auf den aktuellen Zustandswert des Signals mittels des Mehrparameterantwortprofils; und
Übermitteln (90) der Mehrparameteranweisung an das Zielsystem, um eine Antwort auf den aktuellen Zustandswert des Signals umzusetzen.

## Revendications

1. Générateur d'interface utilisateur graphique (GUI) (28) configuré pour déterminer des valeurs d'une pluralité de paramètres définissant un profil de réponse et pour générer une GUI affichable, le générateur de GUI (28) étant configuré pour générer une GUI comprenant :
un premier objet curseur (52b) commandable par l'utilisateur pour établir une valeur d'un paramètre d'agrégation, dans lequel le paramètre d'agrégation a un ensemble de relations prédéterminées avec chacun d'une pluralité des paramètres définissant un profil de réponse ; et
un graphe de réponse bidimensionnel (32) de la valeur d'état actuelle d'un signal qui est traité par un système cible en fonction d'un paramètre de réponse souhaité, le graphe bidimensionnel (32) montrant un profil de réponse à paramètres multiples généré par :
i) une valeur d'un paramètre de référence ;
ii) une valeur du paramètre d'agrégation, qui à son tour détermine les valeurs de la pluralité des paramètres définissant une réponse ; et
iii) un ensemble de contraintes prédéterminées (33) ;
dans lequel la valeur du paramètre de référence détermine un point de référence sur le graphe bidimensionnel (32) et la valeur du paramètre d'agrégation et l'ensemble des contraintes prédéterminées (33) déterminent la forme du profil de réponse complet par rapport au point de référence pour différentes valeurs de la valeur d'état actuelle ;
dans lequel le générateur de GUI (28) est configuré pour fournir le profil de réponse à paramètres multiples à un moteur d'établissement de paramètre (26) afin de permettre la génération de l'instruction à paramètres multiples en réponse à la valeur d'état actuelle du signal à l'aide du profil de réponse à paramètres multiples.

2. Générateur de GUI selon la revendication 1, comprenant en outre un deuxième objet de commande de curseur (52a) commandable par l'utilisateur pour établir la valeur du paramètre de référence.

3. Système de réponse (10) mis en œuvre par ordinateur configuré pour créer un profil de réponse à paramètres multiples afin de générer une instruction à paramètres multiples destinée à un système cible pour répondre à une valeur d'état actuelle d'un signal traité par le système cible, le système de réponse (10) comprenant :
le générateur d'interface utilisateur graphique (GUI) (28) de la revendication 1, la GUI comprenant en outre : un deuxième objet de commande de curseur (52a) commandable par l'utilisateur pour établir une valeur d'un paramètre de référence ;
le moteur d'établissement de paramètre (26) configuré pour générer l'instruction à paramètres multiples ; et
un moteur de communication (30) pour transmettre l'instruction à paramètres multiples au système cible afin de mettre en œuvre une réponse à la valeur d'état actuelle du signal.

4. Système de réponse (10) mis en œuvre par ordinateur selon la revendication 3, dans lequel une variation de la valeur du premier ou du deuxième objet curseur (52b, 52a) commandable par l'utilisateur entraîne une variation en temps réel du graphe bidimensionnel (32) afin d'illustrer l'effet de la valeur déterminée par l'utilisateur du paramètre de référence ou de la valeur déterminée par l'utilisateur du paramètre d'agrégation sur le profil de réponse à paramètres multiples.

5. Système de réponse (10) mis en œuvre par ordinateur selon la revendication 3 ou 4, dans lequel les premier et deuxième objets curseurs (52b, 52a) commandables par l'utilisateur comprennent chacun des curseurs circonférentiels.

6. Système de réponse (10) mis en œuvre par ordinateur selon l'une quelconque des revendications 3 à 5, dans lequel l'un des premier et deuxième curseurs (52b, 52a) est configuré de telle sorte qu'un premier quantum de déplacement de l'un des premier et deuxième curseurs (52b, 52a) fournit un deuxième quantum non linéaire d'établissement d'une variable associée audit un des premier et deuxième curseurs (52b, 52a).

7. Système de réponse (10) mis en œuvre par ordinateur selon l'une quelconque des revendications 3 à 6, dans lequel la GUI comprend en outre un point objet (110) commandé par l'utilisateur pour définir une paire de paramètres de coordonnées, le point objet étant mobile au sein de la GUI en deux dimensions, dans lequel la valeur de la paire de paramètres de coordonnées modifie l'ensemble de relations prédéterminées avec chacun de la pluralité de paramètres déterminant le profil de réponse.

8. Système de réponse (10) mis en œuvre par ordinateur selon la revendication 7, dans lequel la paire de paramètres de coordonnées définie par le point objet (110) commandé par l'utilisateur définit des valeurs de coordonnées dans des directions orthogonales.

9. Système de réponse (10) mis en œuvre par ordinateur selon la revendication 6 ou 7 lorsqu'elle dépend de la revendication 5, dans lequel le point objet (110) commandé par l'utilisateur est positionné au sein de l'un des curseurs circonférentiels et a une portée de déplacement déterminée par une zone définie par le curseur circonférentiel.

10. Système de réponse (10) mis en œuvre par ordinateur selon l'une quelconque des revendications 3 à 9, dans lequel le système (10) mis en œuvre par ordinateur est réalisé au sein d'un dispositif mobile (18) ayant un écran tactile (16) avec une diagonale d'écran inférieure à 18 centimètres.

11. Système de réponse (10) mis en œuvre par ordinateur selon l'une quelconque des revendications 3 à 10, dans lequel le générateur de GUI (28) est configuré pour déterminer au minimum quatre points sur le profil de réponse définissant huit variables dans un espace bidimensionnel ou au minimum cinq points sur le profil de réponse définissant dix variables dans un espace bidimensionnel.

12. Système de réponse (10) mis en œuvre par ordinateur selon l'une quelconque des revendications 3 à 11, dans lequel le générateur de GUI (28) est configuré pour générer le profil de réponse sous forme de fonction linéaire par morceaux.

13. Système de réponse (10) mis en œuvre par ordinateur selon l'une quelconque des revendications 3 à 12, dans lequel les contraintes (33) définissent :
i) les limites d'un gradient d'une portion du profil de réponse ; ou
ii) un gain moyen concernant un niveau déterminé du profil de réponse ; ou
iii) une quantité de ressources disponibles à utiliser dans la génération de l'instruction à paramètres multiples ; ou
iv) un maximum ou un minimum de tout paramètre déterminant un profil ; ou
v) une fonction de probabilité appliquée au profil de réponse.

14. Procédé (60) mis en œuvre par ordinateur de détermination de valeurs d'une pluralité de paramètres définissant un profil de réponse et de génération d'une interface utilisateur graphique (GUI) affichable, le procédé comprenant :
la détection (66) d'une première entrée utilisateur sur un premier objet curseur commandable par l'utilisateur de la GUI, la première entrée utilisateur étant un ajustement du premier objet curseur commandable par l'utilisateur établissant une valeur d'un paramètre d'agrégation, dans lequel le paramètre d'agrégation a un ensemble de relations prédéterminées avec chacun de la pluralité de paramètres définissant une réponse ;
la génération (68) d'un graphe bidimensionnel de valeurs d'état actuelles d'un signal qui est traité par un système cible en fonction de valeurs d'un paramètre de réponse souhaité, le graphe bidimensionnel montrant le profil de réponse à paramètres multiples généré par :
i) la valeur d'un paramètre de référence ;
ii) la valeur du paramètre d'agrégation qui à son tour détermine les valeurs de la pluralité de paramètres définissant une réponse ; et
iii) un ensemble de contraintes prédéterminées ;
dans lequel la valeur du paramètre de référence détermine un point de référence sur le graphe bidimensionnel et la valeur du paramètre d'agrégation et l'ensemble de contraintes prédéterminées déterminent la forme du profil de réponse complet par rapport au point de référence pour différentes valeurs de la valeur d'état actuelle ; et
la fourniture du profil de réponse à paramètres multiples à un moteur d'établissement de paramètres afin de permettre la génération de l'instruction à paramètres multiples en réponse à la valeur d'état actuelle du signal à l'aide du profil de réponse à paramètres multiples.

15. Procédé (80) mis en œuvre par ordinateur de création d'un profil de réponse à paramètres multiples à utiliser pour générer une instruction à paramètres multiples destinée à un système cible pour répondre à une valeur d'état actuelle d'un signal qui est traité par le système cible, le procédé comprenant :
la génération d'une interface utilisateur graphique (GUI) selon le procédé (60) de la revendication 14, comprenant en outre
la détection d'une deuxième entrée utilisateur au niveau d'un deuxième objet de commande de curseur commandable par l'utilisateur de la GUI, la deuxième entrée utilisateur étant un ajustement du deuxième objet de commande de curseur commandable par l'utilisateur établissant une valeur d'un paramètre de référence ;
la génération (88) de l'instruction à paramètres multiples en réponse à la valeur d'état actuelle du signal, à l'aide du profil de réponse à paramètres multiples ; et
la transmission (90) de l'instruction à paramètres multiples au système cible pour mettre en œuvre une réponse à la valeur d'état actuelle du signal.
